(19) Europäisches Patentamt / European Patent Office / Office européen des brevets

(11) **EP 4 123 509 A1**

(12) **EUROPEAN PATENT APPLICATION**

(43) Date of publication:
**25.01.2023 Bulletin 2023/04**

(21) Application number: **21186786.6**

(22) Date of filing: **20.07.2021**

(51) International Patent Classification (IPC):
**G06N 3/04** *(2006.01)* **G06N 3/08** *(2006.01)*

(52) Cooperative Patent Classification (CPC):
**G06N 3/0454; G06N 3/0472; G06N 3/084; G06N 3/088**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Microsoft Technology Licensing, LLC Redmond, WA 98052-6399 (US)**

(72) Inventors:
• **ZHANG, Cheng Washington, 98052-6399 (US)**
• **ALLAMANIS, Miltiadis Washington, 98052-6399 (US)**
• **PEYTON JONES, Simon, Loftus Washington, 98052-6399 (US)**
• **LAMB, Angus, James Washington, 98052-6399 (US)**
• **MORALES- ÁLVAREZ, Pablo Washington, 98052-6399 (US)**

(74) Representative: **Townsend, Martyn et al Page White & Farrer Limited Bedford House 21A John Street London WC1N 2BF (GB)**

(54) **CAUSAL DISCOVERY AND MISSING VALUE IMPUTATION**

(57) A computer-implemented method comprising: receiving an input vector comprising values of variables; using a first neural network to encode the variables of the input vector into a plurality of latent vectors; inputting the plurality of latent vectors into a second neural network comprising a graph neural network, wherein the graph neural network is parametrized by a graph comprising edge probabilities indicating causal relationships between the variables, in order to determine a computed vector value; and tuning the edge probabilities of the graph, one or more parameters of the first neural network and one or more parameters of the second neural network to minimise a loss function, wherein the loss function comprises a measure of difference between the input vector and the computed vector value and a function of the graph.

### Figure 9

**Description**

Background

Neural networks are used in the field of machine learning and artificial intelligence (AI). A neural network comprises a plurality of nodes which are interconnected by links, sometimes referred to as edges. The input edges of one or more nodes form the input of the network as a whole, and the output edges of one or more other nodes form the output of the network as a whole, whilst the output edges of various nodes within the network form the input edges to other nodes. Each node represents a function of its input edge(s) weighted by a respective weight; the result being output on its output edge(s). The weights can be gradually tuned based on a set of experience data (e.g. training data) to tend towards a state where the output of the network will output a desired value for a given input.

Typically, the nodes are arranged into layers with at least an input and an output layer. A "deep" neural network comprises one or more intermediate or "hidden" layers in between the input layer and the output layer. The neural network can take input data and propagate the input data through the layers of the network to generate output data. Certain nodes within the network perform operations on the data, and the result of those operations is passed to other nodes, and so on.

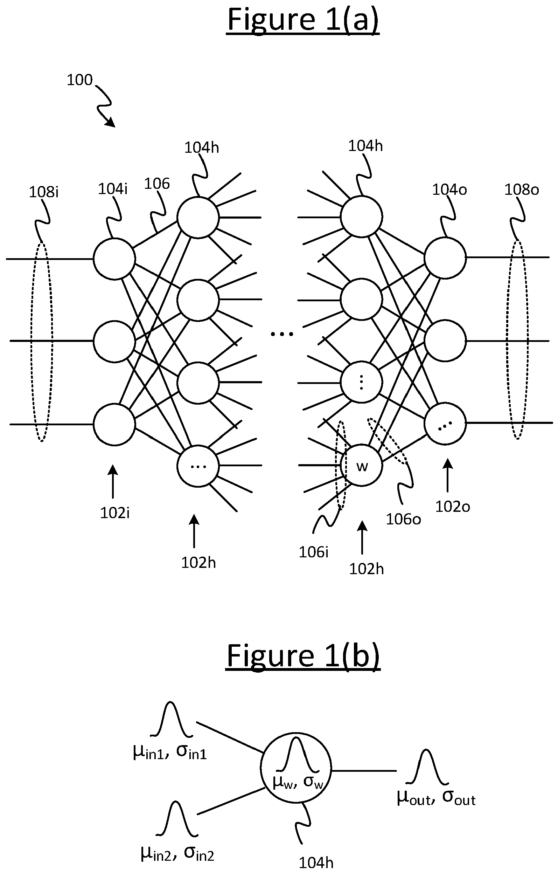

Figure 1(a) gives a simplified representation of an example neural network 108. The example neural network comprises multiple layers of nodes 104: an input layer 102i, one or more hidden layers 102h and an output layer 102o. In practice, there may be many nodes in each layer, but for simplicity only a few are illustrated. Each node is configured to generate an output by carrying out a function on the values input to that node. The inputs to one or more nodes form the input of the neural network, the outputs of some nodes form the inputs to other nodes, and the outputs of one or more nodes form the output of the network.

At some or all the nodes of the network, the input to that node is weighted by a respective weight. A weight may define the connectivity between a node in a given layer and the nodes in the next layer of the neural network. A weight can take the form of a scalar or a probabilistic distribution. When the weights are defined by a distribution, as in a Bayesian model, the neural network can be fully probabilistic and captures the concept of uncertainty. The values of the connections 106 between nodes may also be modelled as distributions. This is illustrated schematically in Figure 1(b). The distributions may be represented in the form of a set of samples or a set of parameters parameterizing the distribution (e.g. the mean $\mu$ and standard deviation $\sigma$ or variance $\sigma^2$).

The network learns by operating on data input at the input layer, and, based on the input data, adjusting the weights applied by some or all of the nodes in the network. There are different learning approaches, but in general there is a forward propagation through the network from left to right in Figure 1(a), a calculation of an overall error, and a backward propagation of the error through the network from right to left in Figure 1(a). In the next cycle, each node takes into account the back propagated error and produces a revised set of weights. In this way, the network can be trained to perform its desired operation.

The input to the network is typically a vector, each element of the vector representing a different corresponding feature. E.g. in the case of image recognition the elements of this feature vector may represent different pixel values, or in a medical application the different features may represent different symptoms. The output of the network may be a scalar or a vector. The output may represent a classification, e.g. an indication of whether a certain object such as an elephant is recognized in the image, or a diagnosis of the patient in the medical example.

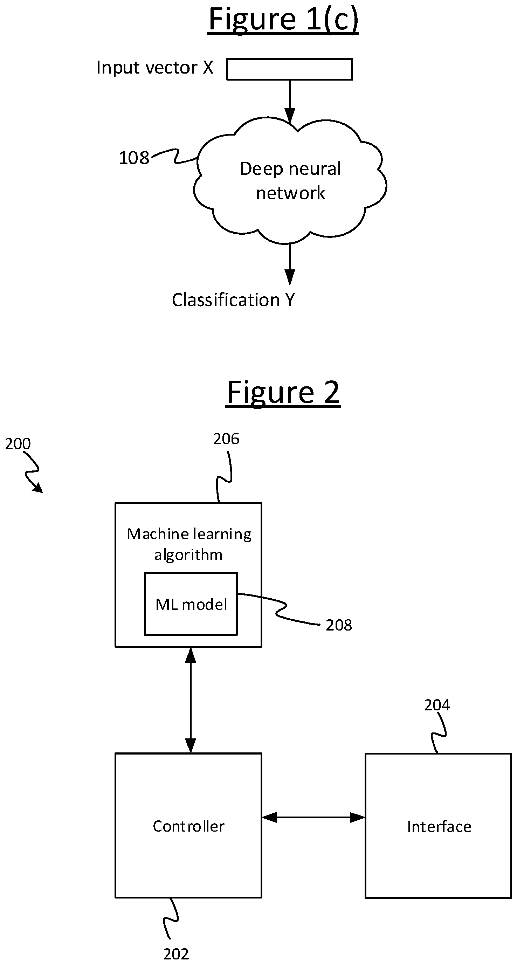

Figure 1(c) shows a simple arrangement in which a neural network is arranged to predict a classification based on an input feature vector. During a training phase, experience data comprising a large number of input data points is supplied to the neural network, each data point comprising an example set of values for the feature vector, labelled with a respective corresponding value of the classification (e.g. elephant or not elephant). Over many such example data points, the learning algorithm tunes the weights to reduce the overall error in the network. Once trained with a suitable number of data points, a target feature vector can then be input to the neural network without a label, and the network can instead predict the value of the classification based on the input feature values and the tuned weights.

Training in this manner is sometimes referred to as a supervised approach. Other approaches are also possible, such as a reinforcement approach wherein the network each data point is not initially labelled. The learning algorithm begins by guessing the corresponding output for each point, and is then told whether it was correct, gradually tuning the weights with each such piece of feedback. Another example is an unsupervised approach where input data points are not labelled at all and the learning algorithm is instead left to infer its own structure in the experience data.

Summary

The present disclosure recognizes that by understanding causal relationships between variables when performing missing value imputation, relationships between variables can be determined. The accuracy of missing value imputation can also be improved. Also, a scalable way to discover causal relationship among variables even under a situation where data values for certain variables are not observed is provided. This can be useful, for example, in a healthcare setting for determining the condition of patients based on sensor data or for diagnosing faults with equipment (e.g. electrical equipment). In an example, the causal relationship between biological measurements from medical sensor data is determined.

According to one aspect disclosed herein, there is provided a computer-implemented method of machine learning. The method comprises receiving an input vector comprising values of variables. The method then comprises using a first neural network to encode the variables of the input vector into a plurality of latent vectors. The plurality of latent vectors can then be input into a second neural network comprising a graph neural network, wherein the graph neural network is parametrized by a graph comprising edge probabilities indicating causal relationships between the variables, in order to determine a computed vector value. The method then comprises tuning the edge probabilities of the graph, one or more parameters of the first neural network and one or more parameters of the second neural network to minimise a loss function, wherein the loss function comprises a measure of difference between the input vector and the computed vector value and a function of the graph.

In some examples, the values of the variables of the input vector may not be fully observed. This is common in real world scenarios where a value may not be obtained for each variable of an input vector.

The method can optimize a graph showing causal relationships between variables of input information. The method can also be used in some examples to impute missing values.

Brief Description of the Drawings

To assist understanding of embodiments of the present disclosure and to illustrate how such embodiments may be put into effect, reference is made, my way of example only, to the accompanying drawings in which:

Figure 1(a) is a schematic illustration of a neural network;

Figure 1(b) is a schematic illustration of a neural network arranged to predict a classification based on an input feature vector;

Figure 1(c) is a schematic illustration of a node of a Bayesian neural network;

Figure 2 is a schematic illustration of a computing apparatus for implementing a neural network;

Figure 3 schematically illustrates a data set comprising a plurality of data points each comprising one or more feature values;

Figure 4 is a schematic illustration of a variational auto encoder (VAE);

Figure 5 schematically shows an example of information that may be input into a machine learning system;

Figure 6(a) shows an example graph of causal relationships;

Figure 6(b) shows a matrix representing the graph of Figure 6(a);

Figure 7(a) shows a graph of causal relationships;

Figure 7(b) shows a matrix representing the graph of Figure 7(a);

Figure 8(a) shows a cyclic graph of causal relationships;

Figure 8(b) shows a matrix representing the graph of Figure 8(a);

Figure 9 schematically shows a machine learning system;

Figure 10 schematically shows part of a machine learning system;

Figure 11 shows a flow chart of a method;

Figure 12(a) schematically shows a graphic representation of a system;

Figure 12(b) shows a probabilistic graphical model;

Figure 13(a) shows a graph of a true causal relationship between variables;

Figure 13(b) shows a predicted causal relationship between variables;

Figure 14 shows a probability of edges obtained by a method;

Figure 15 shows a hierarchy of topics;

Figure 16 shows an algorithm; and

Figure 17 shows an algorithm;

Figure 18 shows a graph of results.

Detailed Description of Embodiments

The following will present a method of determining causal relationships between variables in input vectors. In some examples, the method can also be used to impute missing values of input vectors.

First however there is described an example system in which the presently disclosed techniques may be implemented. There is also provided an overview of the principles behind graph neural networks and variational auto encoders, based upon which embodiments may be built or expanded.

Figure 2 illustrates an example computing apparatus 200 for implementing an artificial intelligence (AI) algorithm including a machine-learning model in accordance with embodiments described herein. The computing apparatus 200 may take the form of a user terminal such as a desktop computer, laptop computer, tablet, smartphone, wearable smart device such as a smart watch, or an on-board computer of a vehicle such as car, etc. Additionally or alternatively, the computing apparatus 200 may comprise a server. A server herein refers to a logical entity which may comprise one or more physical server units located at one or more geographic sites. Where required, distributed or "cloud" computing techniques are in themselves known in the art. The one or more user terminals and/or the one or more server units of the server may be connected to one another via a packet-switched network, which may comprise for example a wide-area internetwork such as the Internet, a mobile cellular network such as a 3GPP network, a wired local area network (LAN) such as an Ethernet network, or a wireless LAN such as a Wi-Fi, Thread or 6LoWPAN network.

The computing apparatus 200 comprises at least a controller 202, an interface (e.g. a user interface) 204, and an artificial intelligence (AI) algorithm 206. The controller 202 is operatively coupled to each of the interface 204 and the AI algorithm 206.

Each of the controller 202, interface 204 and AI algorithm 206 may be implemented in the form of software code embodied on computer readable storage and run on processing apparatus comprising one or more processors such as CPUs, work accelerator co-processors such as GPUs, and/or other application specific processors, implemented on one or more computer terminals or units at one or more geographic sites. The storage on which the code is stored may comprise one or more memory devices employing one or more memory media (e.g. electronic or magnetic media), again implemented on one or more computer terminals or units at one or more geographic sites. In embodiments, one, some or all the controller 202, interface 204 and AI algorithm 206 may be implemented on the server. Alternatively, a respective instance of one, some or all of these components may be implemented in part or even wholly on each of one, some or all of the one or more user terminals. In further examples, the functionality of the above-mentioned components may be split between any combination of the user terminals and the server. Again, it is noted that, where required, distributed computing techniques are in themselves known in the art. It is also not excluded that one or more of these components may be implemented in dedicated hardware.

The controller 202 comprises a control function for coordinating the functionality of the interface 204 and the AI algorithm 206. The interface 204 refers to the functionality for receiving and/or outputting data. The interface 204 may comprise a user interface (UI) for receiving and/or outputting data to and/or from one or more users, respectively; or it may comprise an interface to a UI on another, external device. Alternatively, the interface may be arranged to collect data from and/or output data to an automated function implemented on the same apparatus or an external device. In the case of an external device, the interface 204 may comprise a wired or wireless interface for communicating, via a wired or wireless connection respectively, with the external device. The interface 204 may comprise one or more constituent types of interface, such as voice interface, and/or a graphical user interface. The interface 204 may present a UI front end to the user(s) through one or more I/O modules on their respective user device(s), e.g. speaker and microphone, touch screen, etc., depending on the type of user interface. The logic of the interface may be implemented on a server and output to the user through the I/O module(s) on his/her user device(s). Alternatively, some or all of the logic of the interface 204 may also be implemented on the user device(s) 102 its/themselves.

The controller 202 is configured to control the AI algorithm 206 to perform operations in accordance with the embodiments described herein. It will be understood that any of the operations disclosed herein may be performed by the AI algorithm 206, under control of the controller 202 to collect experience data from the user and/or an automated process via the interface 204, pass it to the AI algorithm 206, receive predictions back from the AI algorithm and output the predictions to the user and/or automated process through the interface 204.

The AI algorithm 206 comprises a machine-learning model 208, comprising one or more constituent statistical models such as one or more neural networks.

Figure 1(a) illustrates the principle behind a neural network. A neural network 100 comprises a graph of interconnected nodes 104 and edges 106 connecting between nodes, all implemented in software. Each node 104 has one or more input edges and one or more output edges. The input edges of one or more of the nodes 104 form the overall input 108i to the graph (typically an input vector, i.e. there are multiple input edges). The output edges of one or more of the nodes 104 form the overall output 108o of the graph (which may be an output vector in the case where there are multiple output edges). Further, the output edges of at least some of the nodes 104 form the input edges of at least some others of the nodes 104.

Each node 104 represents a function of the input value(s) received on its input edges(s) 106i, the outputs of the function being output on the output edge(s) 106o of the respective node 104, such that the value(s) output on the output edge(s) 106o of the node 104 depend on the respective input value(s) according to the respective function. The function of each node 104 is also parametrized by one or more respective parameters w, sometimes also referred to as weights (not necessarily weights in the sense of multiplicative weights, though that is certainly one possibility). Thus, the relation between the values of the input(s) 106i and the output(s) 106o of each node 104 depends on the respective function of the node and its respective weight(s).

Each weight could simply be a scalar value. Alternatively, as shown in Figure 1(b), at some or all of the nodes 104 in the network 100, the respective weight may be modelled as a probabilistic distribution such as a Gaussian. In such cases the neural network 100 is sometimes referred to as a Bayesian neural network. Optionally, the value input/output on each of some or all of the edges 106 may each also be modelled as a respective probabilistic distribution. For any given weight or edge, the distribution may be modelled in terms of a set of samples of the distribution, or a set of parameters parameterizing the respective distribution, e.g. a pair of parameters specifying its centre point and width (e.g. in terms of its mean $\mu$ and standard deviation $\sigma$ or variance $\sigma^2$).

As shown in Figure 1(a), the nodes 104 of the neural network 100 may be arranged into a plurality of layers, each layer comprising one or more nodes 104. In a so-called "deep" neural network, the neural network 100 comprises an input layer 102i comprising one or more input nodes 104i, one or more hidden layers 102h (also referred to as inner layers) each comprising one or more hidden nodes 104h (or inner nodes), and an output layer 102o comprising one or more output nodes 104o. For simplicity, only two hidden layers 102h are shown in Figure 1(a), but many more may be present.

The different weights of the various nodes 104 in the neural network 100 can be gradually tuned based on a set of experience data (e.g. training data), so as to tend towards a state where the output 108o of the network will produce a desired value for a given input 108i. For instance, before being used in an actual application, the neural network 100 may first be trained for that application. Training comprises inputting experience data in the form of training data to the inputs 108i of the graph and then tuning the weights w of the nodes 104 based on feedback from the output(s) 108o of the graph. The training data comprises multiple different input data points, each comprising a value or vector of values corresponding to the input edge or edges 108i of the graph 100.

For instance, consider a simple example as in Figure 1(c) where the machine-learning model comprises a single neural network 100, arranged to take a feature vector X as its input 108i and to output a classification Y as its output 108o. The input feature vector X comprises a plurality of elements $x_d$, each representing a different feature d = 0, 1, 2, ... etc. E.g. in the example of image recognition, each element of the feature vector X may represent a respective pixel value. For instance one element represents the red channel for pixel (0,0); another element represents the green channel for pixel (0,0); another element represents the blue channel of pixel (0,0); another element represents the red channel of pixel (0,1); and so forth. As another example, where the neural network is used to make a medical diagnosis, each of the elements of the feature vector may represent a value of a different symptom of the subject, or physical feature of the subject or other fact about the subject (e.g. body temperature, blood pressure, etc.).

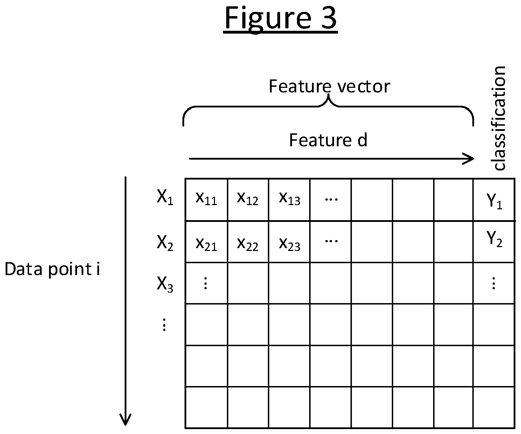

Figure 3 shows an example data set comprising a plurality of data points i = 0, 1, 2, ... etc. Each data point i comprises a respective set of values of the feature vector (where $x_{id}$ is the value of the $d_{th}$ feature in the $i_{th}$ data point). The input feature vector $X_i$ represents the input observations for a given data point, where in general any given observation i may or may not comprise a complete set of values for all the elements of the feature vector X. The classification $Y_i$ represents a corresponding classification of the observation i. In the training data an observed value of classification $Y_i$ is specified with each data point along with the observed values of the feature vector elements (the input data points in the training data are said to be "labelled" with the classification $Y_i$). In subsequent a prediction phase, the classification Y is predicted by the neural network 100 for a further input observation X.

The classification Y could be a scalar or a vector. For instance in the simple example of the elephant-recognizer, Y could be a single binary value representing either elephant or not elephant, or a soft value representing a probability or confidence that the image comprises an image of an elephant. Or similarly of the neural network 100 is being used to text for a particular condition, Y could be a single binary value representing whether the subject has the condition or not, or a soft value representing a probability or confidence that the subject has the condition in question. As another example, Y could comprise a "1-hot" vector, where each element represents a different animal or condition. E.g. Y = [1, 0, 0, ...] represents an elephant, Y = [0, 1, 0, ...] represents an hippopotamus, Y = [0, 0, 1, ...] represents a rhinoceros, et. Or if soft values are used, Y = [0.81, 0.12, 0.05, ...] represents an 81% confidence that the image comprises an image of an elephant, 12% confidence that it comprises an image of an hippopotamus, 5% confidence of a rhinoceros, etc.

In the training phase, the true value of $Y_i$ for each data point i is known. With each training data point i, the AI algorithm 206 measures the resulting output value(s) at the output edge or edges 108o of the graph, and uses this feedback to gradually tune the different weights w of the various nodes 108 so that, over many observed data points, the weights tend towards values which make the output(s) 108i (Y) of the graph 100 as close as possible to the actual observed value(s) in the experience data across the training inputs (for some measure of overall error). I.e. with each piece of input training data, the predetermined training output is compared with the actual observed output of the graph 302o. This comparison provides the feedback which, over many pieces of training data, is used to gradually tune the weights of the various nodes 104 in the graph toward a state whereby the actual output 108o of the graph will closely match the desired or expected output for a given input 108i. Examples of such feedback techniques include for instance stochastic back-propagation.

Once trained, the neural network 100 can then be used to infer a value of the output 108o (Y) for a given value of the input vector 108i (X), or vice versa.

Explicit training based on labelled training data is sometimes referred to as a supervised approach. Other approaches to machine learning are also possible. For instance another example is the reinforcement approach. In this case, the neural network 100 begins making predictions of the classification $Y_i$ for each data point i, at first with little or no accuracy. After making the prediction for each data point I (or at least some of them), the AI algorithm 206 receives feedback (e.g. from a human) as to whether the prediction was correct, and uses this to tune the weights so as to perform better next time. Another example is referred to as the unsupervised approach. In this case the AI algorithm receives no labelling or feedback and instead is left to infer its own structure in the experienced input data.

Figure 1A is a simple example of the use of a neural network 100. In some cases, the machine-learning model 208 may comprise a structure of two or more constituent neural networks 100.

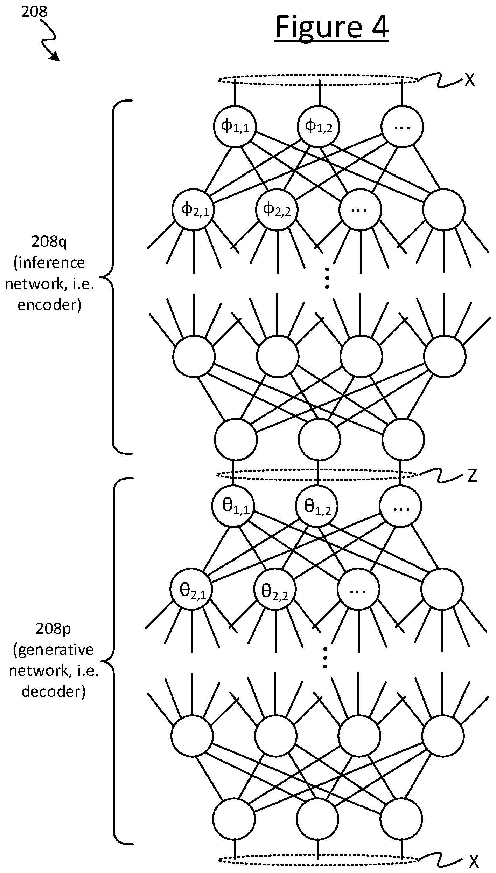

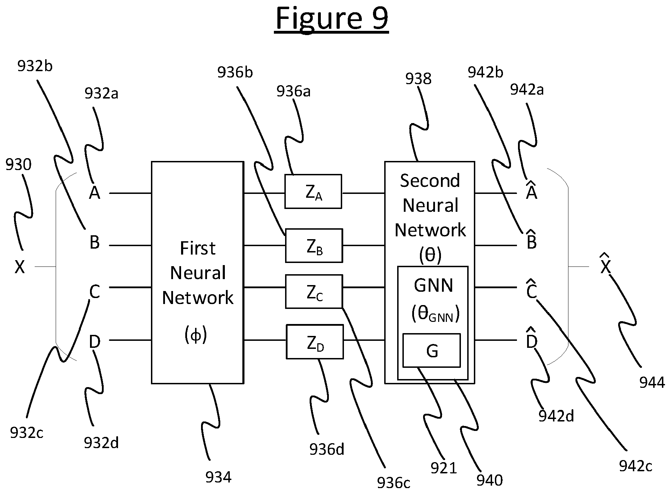

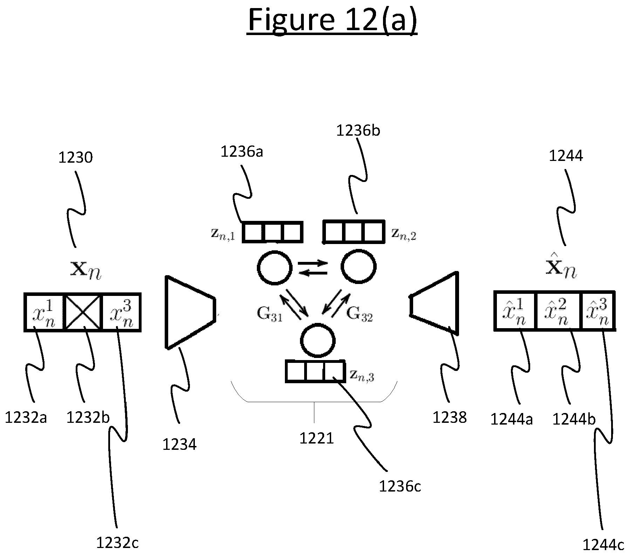

Figure 4 schematically illustrates one such example, known as a variational auto encoder (VAE). In this case the machine learning model 208 comprises an encoder 208q comprising at least one inference network, and a decoder 208p comprising one or more generative networks. Figure 4 is shown to give context of how a latent vector may be determined. According to some examples of the present invention, a different system to a VAE is provided (see for example, Figure 9 and Figure 12(a). This different system also includes a GNN as a decoder. Further, in some examples of the invention each variable of X ($X_d$) has its own neural network to provide corresponding latent vectors $Z_i$. This contrasts with the example shown in Figure 4, where the X values are input into a joint neural network to provide latent vectors Z over more than one X value. Each of the inference networks and the generative networks is an instance of a neural network 100, such as discussed in relation to Figure 1(a). An inference network for the present purposes means a neural network arranged to encode an input into a latent representation of that input, and a generative network means a network arranged to at least partially decode from a latent representation.

The one or more inference networks are arranged to receive the observed feature vector X as an input and encode it into a latent vector Z (a representation in a latent space). The one or more generative networks 208p are arranged to receive the latent vector Z and decode back to the original feature space X.

The latent vector Z is a compressed (i.e. encoded) representation of the information contained in the input observations X. In a VAE, no one element of the latent vector Z necessarily represents directly any real world quantity, but the vector Z as a whole represents the information in the input data in compressed form. It could be considered conceptually to represent abstract features abstracted from the input data X, such as "wrinklyness of skin" and "trunk-like-ness" in the example of elephant recognition (though no one element of the latent vector can necessarily be mapped onto any one such factor, and rather the latent vector Z as a whole encodes such abstract information). The decoder 404 is arranged to decode the latent vector Z back into values in a real-world feature space, i.e. back to an uncompressed form representing the actual observed properties (e.g. pixel values). In some examples, see e.g. Figure 9 and Figure 12(a), a latent vector element is determined for each variable or group of variables input into an encoder.

The weights w of the one or more inference networks 208q are labelled herein $\phi$, whilst the weights w of the one or more generative networks 208p are labelled $\theta$. Each node 104 applies its own respective weight as illustrated in Figure 3, but elsewhere herein the label $\phi$ generally may be used to refer to a vector of weights in one or more of the inference networks 208q, and θ to refer to a vector of weights in one or more of the generative networks 208p.

When using a VAE, with each data point in the training data (or more generally each data point in the experience data during learning), the weights $\phi$ and θ are tuned so that the VAE 208 learns to encode the feature vector X into the latent space Z and back again. For instance, this may be done by minimizing a measure of divergence between $q_\phi(Z_i|X_i)$ and $p_\theta(X_i|Z_i)$, where $q_\varnothing(X_i|Z_i)$ is a function parameterised by $\phi$ representing a vector of the probabilistic distributions of the elements of $Z_i$ output by the encoder 208q given the input values of $X_i$, whilst $p_\theta(X_i|Z_i)$ is a function parameterized by θ representing a vector of the probabilistic distributions of the elements of $X_i$ output by the encoder 208q given $Z_i$. The symbol "|" means "given". The model is trained to reconstruct $X_i$ and therefore maintains a distribution over $X_i$. At the "input side", the value of $X_i$ is known, and at the "output side", the likelihood of $X_i$ under the output distribution of the model is evaluated. The input values of X are sampled from the input data distribution. p(X|Z) is part of the model distribution, and the goal in a VAE of the algorithm 206 is to make p(X) close to the input data distribution. p(X, Z) may be referred to as the model of the decoder, whilst p(Z|X) may be referred to as the posterior or exact posterior, and q(Z|X) as the approximate posterior. p(z) and q(z) may be referred to as priors.

For instance, this may be done by minimizing the Kullback-Leibler (KL) divergence between $q_\phi(Z_i|X_i)$ and $p_\theta(X_i|Z_i)$. The minimization may be performed using an optimization function such as an ELBO (evidence lower bound) function, which uses cost function minimization based on gradient descent. However, in general other metrics and functions are also known in the art for tuning the encoder and decoder neural networks of a VAE.

The requirement to learn to encode to Z and back again amounts to a constraint placed on the overall neural network 208 of the VAE formed from the constituent neural networks 208q, 208p. This is the general principle of an autoencoder. The purpose of forcing the autoencoder to learn to encode and then decode a compressed form of the data, is that this can achieve one or more advantages in the learning compared to a generic neural network; such as learning to ignore noise in the input data, making better generalizations, or because when far away from a solution the compressed form gives better gradient information about how to quickly converge to a solution. In a variational autoencoder, the latent vector Z is subject to an additional constraint that it follows a predetermined form (type) of probabilistic distribution such as a multidimensional Gaussian distribution or gamma distribution.

Nonetheless, an issue with existing machine learning models is that existing imputation methods are agnostic to causality. VAEs do not consider causal relationships between input variables.

To address this, the present disclosure provides a machine learning model that can discover relationships between variables given partial observation and can be used to provide missing value imputation at the same time. In examples, causal discovery is used to help the task of missing value imputation. The causal structure of data is a powerful source of information for real-world decision making, and it can improve and complement other learning tasks. However, historically causality and machine learning research have evolved separately. One of the main challenges in real-world machine learning is the presence of missing data. In some examples, causal discovery can help the task of missing value imputation since the relationships between variables are paramount for such task.

Some examples are scalable, which is useful as the number of possible causal graphs grows exponentially with the number of variables. In some examples, it is not necessary to exhaustively enumerate all possible DAGs for the causal graphs G to find the "best" one, which helps to improve scalability. Some examples perform causal discovery in the presence of missing values, which is not considered in standard approaches. Some examples seek to model complex relationships between variables, so that flexible deep learning models are required. Some examples can discover causal relationships between groups of variables. Variables may be grouped in a smaller number of semantically coherent pre-defined groups. For example, one setting in which such a need arises is in the education domain. Education data can contain student responses to thousands of individual questions, where each question belongs to a broader topic. It is insightful to find relationships between topics instead of individual questions to help teachers adjust the curriculum. For instance, if there exists a causal relationship from one topic to another, the former should be taught earlier in the curriculum. Also, educational data is inherently sparse since it is not feasible to ask every question to every student.

A further example where the method could be applied is in healthcare. For example, if a food log of a set of people (subjects) is recorded, variables could be the weight of consumed apple, consumed orange, consumed banana, consumed cucumber, consumed broccoli and consumed meat for each subject. Further variables could also be blood pressure and blood sugar of each subject. The method could be used to determine the relationship between each of the consumed types of food, blood pressure and blood sugar. Further, if it was desired to determine the relationship between fruit intake, vegetable intake, meat intake, blood pressure and blood sugar, the consumed fruit variables could be grouped together and the consumed vegetable variables could be grouped together when determining causal relationships.

Some examples provide an approach to simultaneously tackle missing data imputation and causal discovery. Some examples provide two outputs in one framework. This is accomplished by inferring a generative model that leverages a structured latent space and a decoder based on Graph Neural Networks (GNN). Namely, the structured latent space endows each variable with its own latent subspace, and the interactions between the subspaces are regulated by a GNN whose behaviour depends on a graph of causal relationships between variables. Some examples leverage continuous optimization of the causal structure to achieve scalability, can be used in the presence of missing data, and can make use of deep learning architectures for increased flexibility. Moreover, the causal structure can be learned at different levels of granularity when the variables are organised in groups.

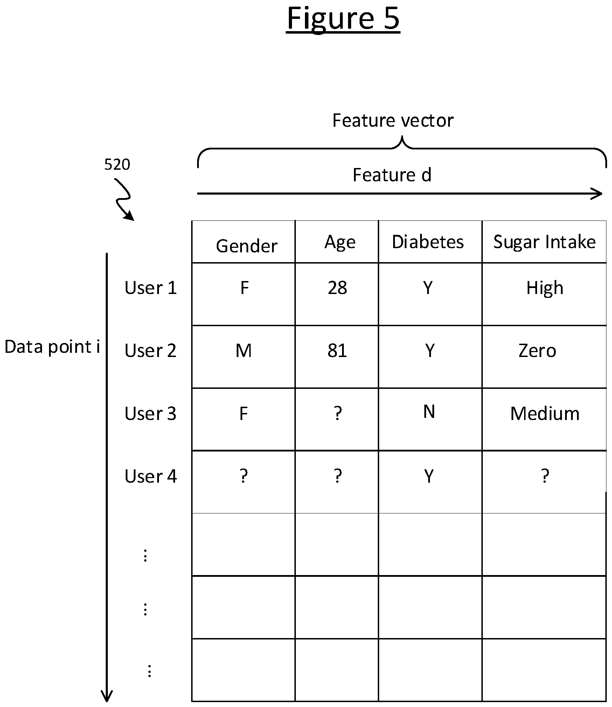

An example of information that may be put into a system is shown at 520 in Figure 5. A number of data points i are shown, each with their own feature vector. In the examples discussed in Figures 5, 6(a), 6(b), 7(a) and 7(b), the data points i are for different users and the variables are given as "Gender", "Age", "Diabetes" and "Sugar Intake". It is emphasised that these examples are examples only, and that the same method could be applied to different variables and different data points. For example, the variables could relate to sensor values of one or more devices, and the data points could relate to various different entities or different points in time for the different devices. In other examples, the variables could relate to data of measurements that define health conditions. In other examples, the variables could relate to data used to run diagnostics of a system. Again, it is emphasised that these are just examples and that the method described herein could be applied to a number of different types of variables and data points. It is also emphasised that the input information may comprise more or fewer data points than shown in Figure 5 and more or fewer variables than shown in Figure 5.

Each data point i in Figure 5 has a feature vector. The feature vector comprises different values for each variable. For example, a feature vector for a first data point, User 1, is (F, 28, Y, High) wherein the values are representative of the variables (Gender, Age, Diabetes, Sugar Intake). A second data point, User 2, also has a full feature vector with no missing values as shown in Figure 5. A third data point, User 3, has a value for 3 variables but has a missing value for the "Age" variable. A fourth data point, User 4, has 3 missing values. The example of Figure 5 shows an example of a plurality of input vectors (vectors that may be input into the system). Each vector is represented as a row in the table. Some input vectors may have missing values for one or more variables.

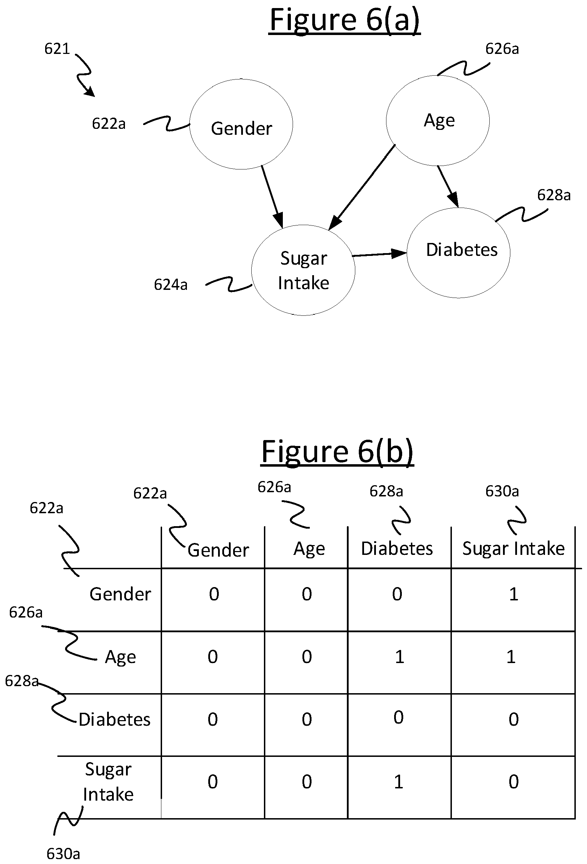

Figure 6a shows an example causal relationship graph G 621 that represents a causal relationship between variables 622a, 624a, 626a, 628a. Variable 622a has a causal effect on variable 624a. Variable 624a has a causal effect on variable 628a. Variable 626a has a causal effect on variables 624a and 628a.

In the specific example shown, gender has a causal effect on sugar intake. Sugar intake has a causal effect on diabetes. Age has a causal effect on sugar intake and diabetes.

Figure 6(b) shown a causality adjacency matrix which is representative of a graph G in Figure 6(a). Graph G shows causal relationships between variables 622a, 624a, 626a and 630a. The same relationships are shown as are shown in Figure 6(a). A "0" value in a cell of a row of a variable represents the variable of that row not having a causal effect on the variable of that column. A "1" value in a cell of a row of a variable represents the variable of that row having a causal effect on the variable of that column.

From Figure 6(a) and 6(b) it can be seen that the variables of the information input into the system in Figure 5 have a causal relationship.

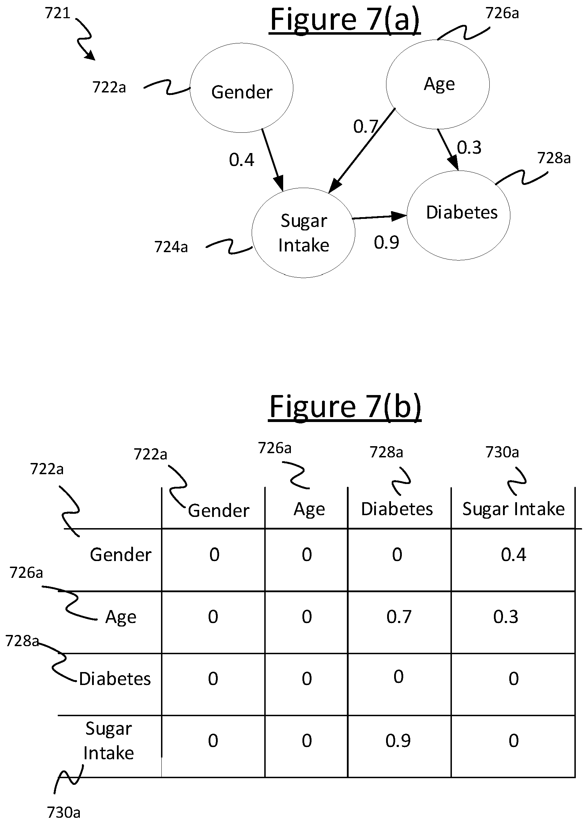

In some examples, graph G can have a probability of a variable having a causal effect along each edge connecting the nodes (variables) of graph G. Such as an example is shown in Figures 7(a) and 7(b).

In the example of graph G 721 shown in Figure 7(a), Variable 722a has a probability of 0.4 of having a causal effect on variable 624a. Variable 724a has a probability of 0.9 of having a causal effect on variable 728a. Variable 726a has a probability of 0.7 of having a causal effect on variable 724a. Variable726a has a probability of 0.3 of having a causal effect on variable 728a.

In the specific example shown, gender has a probability of 0.4 of having a causal effect on sugar intake. Sugar intake has a probability of 0.9 of having a causal effect on diabetes. Age has a probability of 0.7 of having causal effect on sugar intake. Age has a probability of 0.3 of having causal effect on sugar intake and diabetes.

Similar causal relationships are shown in Figure 7(b) as in Figure 7(a).

The causal relationships shown in Figures 5, 6(a), 6(b), 7(a) and 7(b) are acyclic. This means that no causal relationships in graph G are cyclic. In other words, no first variable has a causal relationship on a second variable in a situation where the second variable has a causal relationship on the first variable.

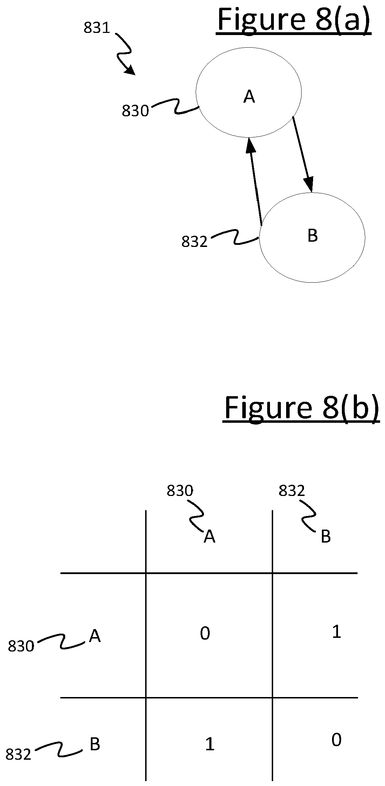

An example of a cyclic causal relationship is shown in Figure 8(a). Variable A 830 has a causal relationship on variable B 832. Variable B 832 has a causal relationship on variable A 830. This creates a positive feedback loop between the two variables. This causal relationship is also shown in Figure 8(b).

Figure 9 shows an example of a system. An input vector X is shown at 930. The input vector X comprises variable A 932a, variable B 932b, variable C 932c and variable D 932d. Although only one input vector X 930 is shown in Figure 9, a plurality of vectors may be input into the system of Figure 9.

Feature vector X 930 (comprising variable A 932a, variable B 932b, variable C 932c and variable D 932d) are input into a first neural network 934. Variable A 932a, variable B 932b, variable C 932c and variable D 932 may be any suitable variable, for example gender, age, diabetes, and sugar intake. First neural network 934 may comprise one or more inference networks. First neural network 934 may comprise an encoder. First neural network 934 may be similar to the inference network 1234 of Figure 12(a). The weights w of the one or more inference networks of first neural network 934 are denoted as $\phi$.

First neural network 934 can act as an element-wise encoder for each variable of X 930. In other words, each element of X 930 is encoded to a respective latent vector. The first neural network 934 outputs: latent vector $Z_A$ 936a corresponding to variable A 932a; latent vector $Z_B$ 936b corresponding to variable B 932b; latent vector $Z_C$ 936c corresponding to variable C 932c; latent vector $Z_D$ 936d corresponding to variable D 932d.

Each latent vector 936a, 936b, 936c and 936d may be input into a second neural network 938. Second neural network 938 comprises a GNN 940 that can operate on graph inputs. These can be used where each latent vector $Z_A$ 936a, $Z_B$ 936b, $Z_C$ 936c and $Z_D$ 936d is defined by a distribution (e.g., a Bayesian model). GNN 940 may comprise weights $\theta_{GNN}$. Second neural network 938 may also comprise other neural networks, comprising other weights $\theta$. GNN 940 is parametrized by graph G 921. G921 dictates that graph over which the GNN 940 operates on. G 921 comprises edge probabilities showing causal relationships between the variables A 932a, B 932b, C 932c and D 932d.

Second neural network 938 then outputs computed vector $\hat{X}$ 944 comprising computed variable $\hat{A}$ 942a, computed variable $\hat{B}$ 942b, computed variable C 942c and computed variable D 942d.

A feature vector X may be input into the system of Figure 9 for each of a plurality of data points i.

In some examples, variables A 932a, B 932b, C 932c and D 932d are scalar values. First neural network 924 may convert these scalar values to latent variables $Z_A$ 936a, $Z_B$ 936b, $Z_C$ 936c and $Z_D$ 936d that have a probabilistic distribution. During this conversion, first neural network 934 may introduce noise into variables A 932a, B 932b, C 932c and D 932d to convert to latent variables $Z_A$ 936a, $Z_B$ 936b, $Z_C$ 936c and $Z_D$ 936d. The distributions may be represented in the form of a set of samples or a set of parameters parameterizing the distribution (e.g. the mean $\mu$ and standard deviation $\sigma$ or variance $\sigma^2$). The probabilistic distributions of latent variables $Z_A$ 936a, $Z_B$ 936b, $Z_C$ 936c and $Z_D$ 936d may be input into GNN 921. Either of GNN 921 or second neural network 928 may then convert to latent variables $Z_A$ 936a, $Z_B$ 936b, $Z_C$ 936c and $Z_D$ 936d to scalar output values $\hat{A}$ 942a, $\hat{B}$ 942b, C 942c and $\hat{D}$ 942d of output vector $\hat{X}$ 944.

The values of graph G showing causal relationships between the variables A 932a, B 932b, C 932c and D 932d can be tuned using the method described below. The tuning may comprise an attempt to optimize the values of G 921. In some examples, the values of edge probabilities showing causal relationships between the variables of graph G 921 is optimized using the below method. In some examples, the below method can also be used to tune (attempt to optimize) values of at least one of $\theta_{GNN}$, $\theta$ and $\phi$.

When a vector such as vector X 930 is received to be input into the system of Figure 9, a percentage of values are randomly removed from the input vector $X$ to provide a modified vector $\hat{X}$. In some examples, instead of completely removing values they are set to an arbitrary predefined value for the respective variable, e.g. set to 0.5. $\hat{X}$ is then input into the system of Figure 9 to output a corresponding $\hat{X}$ value. In some examples, missing values in $\hat{X}$ may be imputed to determine output vector $\hat{X}$ 944. In some examples predefined values set for values of $\tilde{X}$ may be changed to determine output vector $\hat{X}$ 944.

A loss function is then determined based on the difference between input vector X 930 and output vector $\hat{X}$ 944, where $\hat{X}$ 944 is the output of the system for the input $\hat{X}$ value. For example, the loss function could be determined by $|X-\hat{X}|^2$. Any other suitable equation for determining an amount of difference between X 930 and output vector $\hat{X}$ 944 may be used, however.

In some examples, the loss function may additionally include a function that penalises cyclic relationships between variables in X when determining G 921. This function may increase the value of the loss function when a cyclic relationship is present in G 921. This function can enforce that G 921 is a Direct Acyclic Graph (DAG). The function can considered to be DAG(G), where DAG(G) penalises any cycles between variables in graph G and in some examples removes all cyclicity in graph G 921. By removing cyclicity in graph G, the loss function can be minimized more efficiently to determine values of G, $\theta_{GNN}$, $\theta$ and $\phi$ as the minimization of the loss function will converge to a solution in fewer computational steps. The method may comprise a constraint that G 921 does not comprise any cyclic causal relationships between variables of G 921.

In some examples the loss function may also comprise a further function for regularizing G 921. The function may comprise a measure of difference between an estimated value of a posterior function of G 921, q(G), and a prior value of G 921, p(G). In some examples, the prior value may be a human prior value input for G 921 by a user. In other examples, p(G) may be set arbitrarily. As such, the user can input previous expectations of G 921 into the loss function (e.g. if the user expects sugar causes diabetes, they could reflect this in p(G)). The measure of difference may be determined using any suitable algorithm, for example a Kullback-Liebler (KL) divergence function. The measure of difference may be expressed as KL[q(G)||p(G)], for example.

A combination of DAG(G) and KL[q(G)||p(G)] may be considered to be a regularization function of G 921, reg(G).

The loss function may also comprise a regularization of Z (i.e., of the values $Z_A$ 936a, $Z_B$ 936b, $Z_C$ 936c and $Z_D$ 936d). The function may comprise a measure of difference between an estimated value of Z 921, q(Z), and a prior value of G 921, p(Z). The prior value may be a human prior value input for Z by a user. In other examples, p(Z) may be set arbitrarily. As such, the user can input previous expectations on Z into the loss function. For example, a user may have an expectation of how the values of Z are distributed. For example, a user may have an expectation of the type of distribution (e.g. a normal distribution), the mean of a distribution and/or a variance of the distribution of the Z values.

The measure of difference may be determined using any suitable algorithm, for example a Kullback-Liebler (KL) divergence function. The measure of difference may be expressed as KL[q(Z)||p(Z)], for example.

KL[q(Z)|p(Z)] may be considered to be a regularization function of Z, reg(Z).

The loss function of the method, L, may in some examples be considered to be:

$$L = |X-\hat{X}|^2 + reg(Z) + reg(G)$$

$$L = |X-\hat{X}|^2 + KL[q(Z)||p(Z)]) + KL[q(G)||p(G)] + DAG(G)$$

In some examples, reg (Z) is not included in the loss function.

The method can comprise tuning the values of one or more of G, $\theta_{GNN}$, $\theta$ and $\phi$ in order to minimise the loss function L.

In some examples, tuning the values of one or more of G (e.g. edge probabilities of graph G 921), $\theta_{GNN}$ (parameters of decoder GNN 921), $\theta$ (parameters of decoder 938) and $\phi$ (parameters of encoder 934) in order to minimise the loss function L can comprise performing a gradient step for G, $\theta_{GNN}$, $\theta$ and $\phi$ to minimise the loss function. The gradient step may involve the following steps:

- Computing the loss L;
- Differentiating L and computing the gradient of each parameter with respect to L (using backpropagation);
- Updating the values of each parameter by subtracting a small value proportional to the gradient.

The loss function may be minimized over a plurality of N input vectors, to provide tuned values of G, $\theta_{GNN}$, $\theta$ and $\phi$. This provides further tuning of edge probabilities of the graph G 921 and also provides further tuning of $\theta_{GNN}$, $\theta$ and $\phi$.

By minimising the loss function L, optimized values for G 921 can be determined. This allows a user to review the optimized values of G to discover causal relationships between variables A 932a, B 932b, C 932c and D 932d.

In some examples, the loss function may only operate on variables that are present in input vector X and not on features that are missing from an input vector. For example, if input vector X 930 only had values for variables A 932a, C 932c and D 932d, but not for B 932b, the loss function would not be applied to variable B. This is because the missing values do not provide information about how to tune G, $\theta_{GNN}$, $\theta$ and $\phi$.

Once the values of G, $\theta_{GNN}$, $\theta$ and $\phi$ have been tuned using the above described method, the system of Figure 9 can also be used to impute missing values of further input vectors. For example, the values of G, $\theta_{GNN}$, $\theta$ and $\phi$ can be tuned and then fixed (set). The fixing of these values may be temporary until they are next tuned. A further input vector $X_M$ can then be input into the system of figure 9 to output $\hat{X}_M$. In some examples, $X_M$ may be missing one or more values for its variables (e.g. for one of variables A 932a, B 932b, C 932c and D 932d). The system of Figure 9 can then impute these values for the variables of $\hat{X}_M$. As such, missing values of $X_M$ are imputed for $\hat{X}_M$.

In some examples, variables of input feature vectors may be grouped together to provide a latent vector for the group of variables. This can be useful as the overall amount of computation is reduced, as latent vectors only have to be determined for each group.

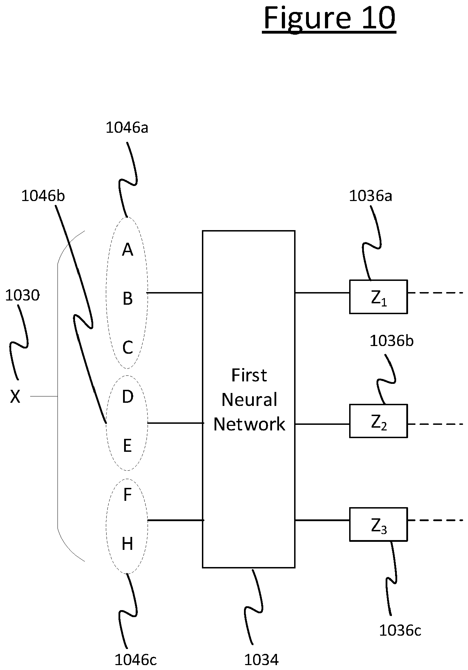

An example where variables A, B C, D, E, F and H of vector X 1030 are grouped is shown in Figure 10. Variables A, B and C are grouped into a first group 1046a which is converted to a respective latent vector $Z_1$ 1036a. Variables D and E are grouped into a second group 1046b which is converted to a respective latent vector $Z_2$ 1036b. Variables F and H are grouped into a second group 1046b which is converted to a respective latent vector $Z_3$ 1036c. It will be understood that any other grouping pattern may be used, and that what is shown in Figure 10 is an example only In some examples, non-adjacent variables could be grouped together. In some examples, more or fewer variables may be used.

Each group provides a corresponding latent vector (latent vectors $Z_1$ 1036a, $Z_2$ 1036b and $Z_3$ 1036c). The latent vectors can then be used in a similar way to the latent vectors shown in Figure 9 to output a computed $\hat{X}$ value using a second neural network comprising a GNN characterised by G (not shown in Figure 9 for clarity). When the variables are grouped together, the causality graph G shows causal relationships between groups of variables (e.g. the causal relationship between 1046a, 1046b and 1046c) rather than between individual variables as in the example of Figure 9.

In some examples, variables may be grouped based on what they represent. For example, when determining a patient's health, a first measurement for heart rate and a second measurement for heart rate made using an alternative method may be grouped together, as they are closely linked.

As an example, group 1046a could group together 3 different measures for cholesterol level, group 1046b could group together two different measures for blood pressure and group 1046v could group together two different measures for heart rate. The causal graph G for Figure 10 would then represent the relationship between the three groups, i.e. would show the causal relationship between cholesterol level, blood pressure and heart rate.

In some examples, the variables of input vector X could represent one or more sensor values.

In some examples, the variables of input vector X could represent one or more sensor values for at least one health monitoring device. The above-described method could then discover causal relationships between sensor values for the at least one health monitoring device (e.g. between blood pressure and body temperature). Further, if one of the sensors is malfunctioning, the method can impute any missing values from the sensors. The discovered causal relationships could be used to diagnose a patient. The imputed missing values could also be used to diagnose a patient with a health condition.

In a further example, the variables of input vector X in Figures 9 or 10 could represent one or more sensor values for at least one health monitoring device and represent further medical information from medical records or questionnaires for one or more patients. The discovered causal relationships could be used to diagnose a patient. The imputed missing values could also be used to diagnose a patient with a health condition.

In some examples, the variables of input vector X could represent one or more sensor values representing states of a device or a system of devices. The above-described method could then discover causal relationships between sensor values for the device or the system of devices. For example, a causal relationship graph G could show that leaving the device on for a long period of time causes overheating, which causes a device to power off and cause a fault in a network. The causal relationship G could be used to determine reasons why a device or system of devices has malfunctioned.

Further, if one or more of the sensors is malfunctioning, the method can impute any missing values from the sensors. The imputed missing values could also be used to work out if a device or system of devices is malfunctioning and could be used to work out why the device or system of devices is malfunctioning.

In a further example, the above described method of finding causal relationships and missing values could be applied in a power system or other industrial system. Variables may comprise weather and/or air conditions. Further variables may comprise efficiency levels and a type of electrical generator (e.g. wind, solar, tidal, etc.). The system can be used to determine the casual relationships between the variables to determine which types of electrical generator are most efficient during certain conditions. Further, the method can be used even when values for certain variables have not been observed. Also, the missing values can be predicted by the method.

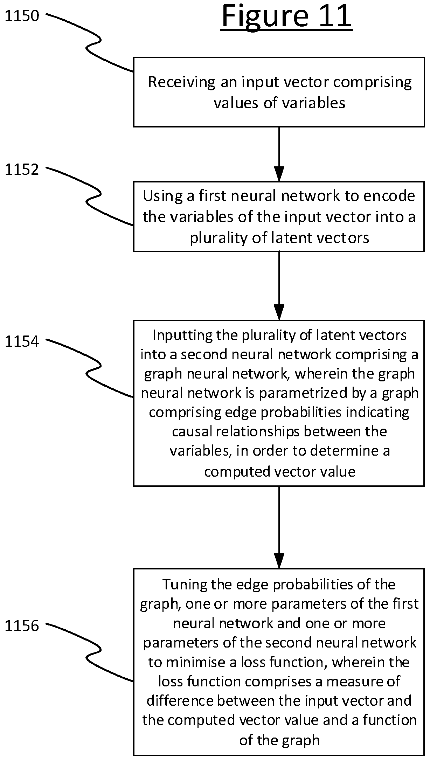

Figure 11 shows a flow chat of an example method.

At 1150, the method comprises receiving an input vector comprising values of variables. In some examples, the input vector may have missing values.

In some examples, between 1150 and 1152, one or more values is removed from the input vector. The input vector with the values removed may then be used to determine the computed vector in 1154.

At 1152, the method comprises using a first neural network to encode the variables of the input vector into a plurality of latent vectors.

At 1154, the method comprises inputting the plurality of latent vectors into a second neural network comprising a graph neural network, wherein the graph neural network is parametrized by a graph comprising edge probabilities indicating causal relationships between the variables, in order to determine a computed vector value.

At 1156, the method comprises tuning the edge probabilities of the graph, one or more parameters of the first neural network and one or more parameters of the second neural network to minimise a loss function, wherein the loss function comprises a measure of difference between the input vector and the computed vector value and a function of the graph.

Figure 12(a) shows a further representation of a system according to an example. An input vector $X_n$ 1230 comprising values for variables $x_n^1$ 1232a and $x_n^3$ 1232c. The input vector $X_n$ 1230 also comprises a missing value 1232b.

Input vector $x_n$ 1230 is input into first neural network 1234 to output latent vectors $z_{n,1}$ 1236a, $z_{n,2}$ 1236b and $z_{n,3}$ 1236c. The latent vectors are input into GNN 1221. GNN 1221 is dictated by a causal relationship graph G, which comprises edge probabilities between each input variable. The edge probabilities may be tuned as described above. The output from GNN 1221 is then input into neural network 1238. This provides an output vector $\hat{X}_n$ 1244 comprising variables $\hat{x}_n^1$ 1244a, $\hat{x}_n^2$ 1244b and $\hat{x}_n^3$ 1244c. As such, the missing value 1232b in $X_n$ 1230 is imputed in $\hat{x}_n^2$ 1244b of $\hat{x}_n$ 1244.

Input vectors may be input for N data points over n=1,...,N for Figure 12(a).

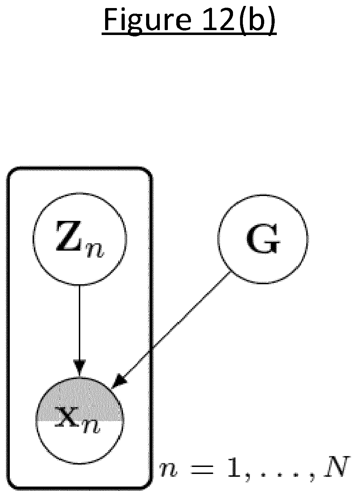

Figure 12(b) shows a probabilistic graphical model. Observations in X can be generated (e.g. $\hat{X}$ values) given the relationships G and exogenous noise Z.

We propose VICAUSE (missing value imputation with causal discovery), an approach to simultaneously tackle missing data imputation and causal discovery. VICAUSE provides two outputs in one framework. This is accomplished by inferring a generative model that leverages a structured latent space and a decoder based on GNNs. Namely, the structured latent space endows each variable with its own latent subspace, and the interactions between the subspaces are regulated by a GNN whose behavior depends on the graph of causal relationships, see Fig. 12(a). VICAUSE satisfies the desired properties it leverages continuous optimization of the causal structure to achieve scalability, it can be used in the presence of missing data, and it makes use of deep learning architectures for increased flexibility. Moreover, the causal structure can be learned at different levels of granularity when the variables are organised in groups. We evaluate VICAUSE in both synthetic and real-world applications that cover different types of variables (continuous or discrete), number of variables (i.e., graph sizes), and granularity of the causal discovery (i.e. variable-level or group-level causal structure discovery). VICAUSE shows improved performance in both missing data imputation and causal discovery when compared to popular and recent approaches for each task.

MODEL DESCRIPTION

We describe VICAUSE for discovering causal relationship between variables first, and then present the extension to groups of variables.

Problem Setting

Our goal is to develop a model that jointly learns to impute missing values and finds causal relationships between variables. The input to VICAUSE is a $N \times D$ training set $X = \{x_n\}_{n=1}^{N}$ with N data points and D variables, which may contain missing values. The observed and unobserved training values are denoted $X_O$ and $X_U$, respectively. In this work, we assume data are either missing completely at random (MCAR) or missing at random (MAR). The output of VICAUSE is i) a model that is able to impute missing values for a previously unseen test sample $\tilde{x} \in \mathbb{R}^D$ ii) a directed graph representing the causal relationships between the D variables. The graph is represented by its adjacency matrix G, i.e. a $D \times D$ matrix whose element $G_{ij}$ is 1 if there exists a causal relationship from the i-th variable to the j-th, and is 0 otherwise.

VICAUSE aims to discover the underlying causal relationships given partially observed data, and the learned model can also be used to impute missing data for test samples. We use a score-based approach for causal discovery. Inspired by Bayesian approaches, our score is defined as the posterior probability of G given the partially observed training data, subject to the constraint that G forms a directed acyclic graph (DAG). Thus, our objective is:

$$G_* = arg\,max_{G \in DAGs}p(X_O|G)p(G) \qquad \text{(Equation 1)}$$

To optimize over the causal structure with the DAG constraint in Equation 1, we resort to recent continuous optimization techniques. Namely, it has been shown ("Zheng, X., Aragam, B., Ravikumar, P., and Xing, E. P. (2018). DAGs with NO TEARS: Continuous Optimization for Structure Learning. In Advances in Neural Information Processing Systems") that G represents a DAG if and only if the non-negative quantity

$$\mathcal{R}(\mathbf{G}) = \mathrm{tr}(e^{\mathbf{G} \odot \mathbf{G}}) - D - 1$$

equals zero. To leverage this DAG-ness characterisation, we introduce a regulariser based on this non-negative quantity to favour the DAG-ness of the solution, i.e.

$$\mathbf{G}_\star = arg\,max_{\mathbf{G}}\,(p(X_O|\mathbf{G})p(\mathbf{G}) - \lambda\mathbf{R}(\mathbf{G})) \qquad \text{(Equation 2)}$$

The model used to compute the score needs to handle partial observations. In addition, with the learned model we can impute missing values given any observations. Thus, given a test sample $\tilde{x} \in \mathbb{R}^D$ with partially observed variables, we can estimate the distribution over $\tilde{x}_U$ (the unobserved values) given $\tilde{x}_O$ (the observed ones) using the learned model (Equation 9). Next, we present our model design, and then the training and imputation procedures.

Generative model and amortized variational inference

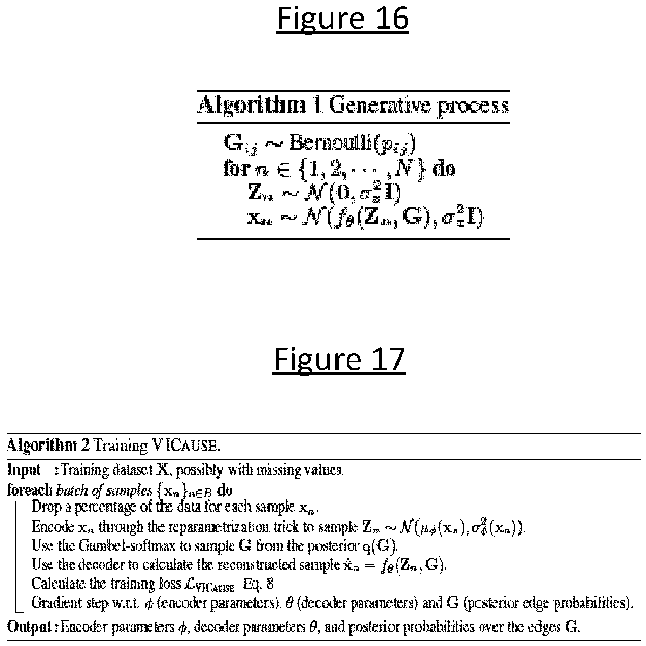

Generative model We assume that the observations in X are generated given the relationships G and exogenous noise Z. Fig. 12(b) illustrates this generative process, and Algorithm 1 in Figure 16 provides the details. Thus, we can write the probabilistic model as

$$p(X, Z, G) = p(G) \prod_n p(x_n | Z_n, G) p(Z_n) \qquad \text{(Equation 3)}$$

We use deep learning, in particular a Graph Neural Network (GNN) for $f_g$, to provide a highly flexible model of the generative process.

Amortized variational inference. The true posterior distribution over Z and G cannot be obtained in closed form in Equation 3, since we use a deep learning architecture. Therefore, we resort to efficient amortized variational inference as in Kingma, D. and Welling, M. (2013). Auto-encoding variational bayes. arXiv preprint arXiv:1312.6114; Kingma, D. P.,Welling, M., et al. (2019). An introduction to variational autoencoders. Foundations and Trends® in Machine Learning, 12(4):307-392; and Zhang,C.,Bütepage, J.,Kjellström,H., and Mandt, S. (2018). Advances in variational inference, IEEE transactions on pattern analysis and machine intelligence, 41(8):2008-2026. Here, we consider a fully factorized variational distribution

$$q(Z, G) = q(G) \prod_{n=1}^{N} q_\phi(Z_n | x_n),$$

where $q_\phi(Z_n|x_n)$ is a Gaussian whose mean and (diagonal) covariance matrix are given by the encoder. For q(G) we consider the product of independent Bernoulli distributions over the edges, that is, each edge is present with a probability $G_{ij} \in (0,1)$ to be estimated. With this formulation, the evidence lower bound (ELBO) is

$$ELBO = \sum_n \left\{ \mathbb{E}_{q_\phi(Z_n|x_n)q(G)} \log p(x_n|Z_n, G) - KL[q_\phi(Z_n|x_n)\|p(Z_n)] \right\} - KL[q(G)\|p(G)] \qquad \text{(Equation 4)}$$

Next, we dive into our choice of generator (decoder), which uses a GNN to regulate the interactions between the variables. Then, we focus on the inference network (encoder), which respects the variable-wise structure of the latent space.

Generator. The generator (also known as decoder) takes $Z_n$ and G as input, and outputs the reconstructed $\hat{x}_n$ = $f_\theta(Z_n, G)$, where $\theta$ are the decoder parameters. We partition the exogenous noise $Z_n$ into D parts, where $z_{n,d}$ is the exogenous noise for each variable d=1, ... ,D. Notice that this defines a variable wise structured latent space. The decoder regulates the interactions between variables with a GNN whose behavior is determined by the relationships in G. Specifically this is done in two steps: GNN message passing layers and a final readout layer yielding the reconstructed sample.

GNN message passing in the generator. In message passing, the information flows between node e in T consecutive node-to-edge (n2e) and edge-to-node (e2n) operations [8, 15]. At the t-th step, each edge i $\rightarrow$ j has a representation (or embedding) $h_{i \rightarrow j}$ summarizing the information sent from node i to node j. Since we are interested in the imputation task, where we may want to predict the value of the parents from their children only, we also introduce the backward embedding. This is denoted $h_{i \rightarrow j}^b$, and codifies the information that the i $\rightarrow$ j edge lets flow from the j-th to the i-th node (for symmetry, the "standard" embedding is called here forward embedding and denoted $h_{i \rightarrow j}^b$. Specifically the n2e and e2noperations used in VICAUSE are n2e :

$$h_{i \rightarrow j}^{(t),f} = MLP^f\left(\left[z_i^{(t-1)}, z_j^{(t-1)}\right]\right), \quad h_{i \rightarrow j}^{(t),b} = MLP^b\left(\left[z_i^{(t-1)}, z_j^{(t-1)}\right]\right), \qquad \text{(Equation 5)}$$

$$\text{e2n}: \quad z_i^{(t)} = \text{MLP}^{e2n}\left(\sum_{k\neq i} G_{ik}\cdot\left\{h_{k\to i}^{(t),f} + h_{i\to k}^{(t),b}\right\}\right) \qquad \text{(Equation 6)}$$

Here, t refers to the t-th iteration of message passing (that is, $Z^{(0)} = Z_n$, notice that we omit the subindex n for simplicity). Finally, $\text{MLP}^f$, $\text{MLP}^b$ and $\text{MLP}^{e2n}$ are MLPs to be estimated. Interestingly, Eqs. (5)-(6) link together the imputation and causal discovery tasks, since the information flow between two nodes (i.e. variables) is proportional to the weight of the corresponding edge.

An algorithm for training VICAUSE is shown in Figure 17.

Read-out layer in the generator. After T iterations of GNN message passing, we have $Z^{(T)}$. We then apply a final function that maps $Z^{(T)}$ to the reconstructed $\hat{x}$, i.e. $\hat{x} = (g(z_1^T),\ldots,g(z_D^T))$, with g given by an MLP. Notice that the decoder parameters θ include the parameters of four neural networks: $\text{MLP}^f$, $\text{MLP}^b$, $\text{MLP}^{e2n}$ and g.

Inference network. As in standard VAEs, the encoder maps a sample $x_n$ to its latent representation $Z_n$. In VICAUSE, we additionally ensure that the encoder respects the structure of the latent space. As discussed before, Zn is partitioned in D parts, one for each variable.

To obtain the mean and variance of Zn, we utilize a multi-head approach with shared parameter $\phi = \{\phi_\mu, \phi_\sigma\}$ for all the variables:

$$\mu_n = \left(\mu_{\phi_\mu}(x_{n,1}),\ldots,\mu_{\phi_\mu}(x_{n,D})\right)^\mathsf{T}, \quad \sigma_n = \left(\sigma_{\phi_\sigma}(x_{n,1}),\ldots,\sigma_{\phi_\sigma}(x_{n,D})\right)^\mathsf{T} \qquad \text{(Equation 7)}$$

Here, $\mu_{\phi\mu}$ and $\sigma_{\phi_\sigma}$ are given by neural networks. When missing values are present, we replace them with a constant as in "Nazabal, A., Olmos, P. M., Ghahramani, Z., and Valera, I. (2020). Handling incomplete heterogeneous data using vaes. PatternRecognition, 107:107501". The encoder respects the structure of the latent space.

Training VICAUSE

Given the model described above, we have the final objective to minimize w.r.t. θ, φ and G:

$$\mathcal{L}_{\text{VICAUSE}}(\theta,\phi,G) = -\text{ELBO} + \lambda\mathbb{E}_{q(G)}\left[\mathcal{R}(G)\right] \qquad \text{(Equation 8)}$$

where ELBO is given by Equation 4 and the DAG regulariser R(G) is defined as above.

Evaluating the training loss $\mathcal{L}_{\text{VICAUSE}}$. VICAUSE can work with any type of data. The log- likelihood term (the first term in Equation 4) is defined according to the data type We use a Gaussian likelihood for continuous variables and a Bernoulli likelihood for binary ones. The standard reparametrization trick is used to sample $Z_n$ from the Gaussian distribution $q_\phi(Z_n|x_n)$. To backpropagate the gradients through the discrete variable G, we resort to the Gumbel-softmax trick to sample from q(G). The $\text{KL}[q_\phi(Z_n|x_n)||p(Z_n)]$ term can be obtained in closed-form, since both are Gaussian distributions. The KL[q(G)||p(G)] term can also be obtained in closed-form, since both are the product of independent Bernoulli distributions over the edges. Notice that this term allows for specifying prior knowledge on the causal structure (e.g. sparsity). Finally, the DAG-loss regulariser in Eq. 8 can be computed by evaluating the function R on a Gumbel-softmax sample from q(G). To make the model adapt to different sparsity levels in the training data X, during training we drop a random percentage of the observed values. The full training procedure for VICAUSE is summarised in Algorithm 2 shown in Figure 17.

Two-step training. Although important for the imputation task, the use of both forward and backward MLPs introduces a symmetry that hampers the correct identification of the causal direction. Namely, if the forward and backward MLPs are similar models, then A→B and B→A produce exactly the same information flow when the two MLPs are swapped To overcome this issue, we propose a two-step training scheme. In the first stage the backward MLP is disabled so that the symmetry is broken and the algorithm can learn the causal structure. In the second stage, we fix the graph structure (i.e. the variational parameter G) and continue to train the model with backward MLP. This two-stage training process allows VICAUSE to leverage the backward MLP for the imputation task without interfering with the causal discovery.

Revisiting the learning objectives. The optimal graph of relationships, which was denoted G∗ above, is given by the posterior graph of probabilities G(it gives the best score as it maximizes the posterior. Similar to "Ma, C., Tschiatschek, S., Palla, K., Hernandez-Lobato, J. M., Nowozin, S., and Zhang, C. (2019). EDDI: Efficient dynamic discovery of high value information with partial VAE. In Chaudhuri, K. and Salakhutdinov, R., editors, Proceedings of the36th International Conference on Machine Learning, volume 97 of Proceedings of Machine Learning Research, pages 4234-4243. PMLR" and/or "Nazabal, A., Olmos, P. M., Ghahramani, Z., and Valera, I. (2020). Handling incomplete heterogeneous data using vaes. Pattern Recognition, 107:107501", the trained model can impute missing values for a test instance $\tilde{x}$ as

$$\mathrm{p}(\tilde{\mathrm{x}}_U|\tilde{\mathrm{x}}_O, \mathrm{X}) = \int \mathrm{p}(\tilde{\mathrm{x}}_U|\mathrm{Z}, \mathrm{G}) \mathrm{q}_\phi(\mathrm{Z}|\tilde{\mathrm{x}}) \mathrm{q}(\mathrm{G}) \mathrm{dZdG} = \mathbb{E}_{\mathrm{q}_\phi(\mathrm{Z}|\tilde{\mathrm{x}})\mathrm{q}(\mathrm{G})} \mathrm{P}(\tilde{\mathrm{x}}_U|\mathrm{Z}, \mathrm{G})$$ 
(Equation 9)

Therefore, the distribution over $\tilde{x}_U$ (the missing values) is obtained by applying the encoder and the decoder $\tilde{x}$ as input.

Extension to relationship discovery between groups of variables

Thus far, we have assumed that the relationship between individual variables are of interest. As discussed above, finding the relationships between groups of variables is needed in many real world applications. Here, we extend VICAUSE to discover relationships between (pre-defined) groups of variables.

Problem definition We assume that the D variables in X are organized in M<<D groups. For each group m= 1, ... ,M, we write $I_m$ for the variables associated to that group (i.e. $I_m$ = {4,5,6} means that the m-th group contains the fourth, fifth and sixth variables)) The goal is to learn to impute missing values for test samples $\tilde{x} \in \mathbb{R}^D$ (as before), and learn causal relationships between the M groups of variables. In particular, the shape of the learned parameter G is now MxM. Also, the structured latent representation Z is split in M parts, each one corresponding to a different group.

VICAUSE for groups. The formulation of Sec. 2.2 can be naturally generalised to this setting. The generative model is analogous, but each node must be thought now as a group of variables (instead of a single variable). The main difference lies in the mappings that connect the sample $x_n$ and its latent representation $Z_n$. Specifically, there are two such mappings: the encoder and the read-out layer in the decoder. Unlike before (Eq. 7), the same neural network cannot be used now for all the latent subspaces, since different groups of variables may have different dimensionalities (namely, the m-th group has a dimensionality of $|I_m|$, i.e. the number of variables in that group). To overcome this, we propose to use a group-specific neural network for each latent subspace. Specifically the encoder computes the mean of the latent variable as

$$\mu_n = \left(\mu_{\phi_1}^1(\chi_1), \ldots, \mu_{\phi_M}^M(\chi_M)\right)^\mathsf{T}$$
(Equation 10)

Where $\chi_m$ includes all the variables in the m-th group (i.e., $\chi_m = [x_i]_{i \in I_m}$), and $\mu_{\phi_1}^1, \ldots, \mu_{\phi_M}^M$ are M different MLPs. The expressions for the variance and for the read-out layer within the decoder are analogous. Fig. 7(b) in the Appendix shows a graphical representation of Eq. 10. The rest of training for VICAUSE is identical to the case of variables, recall Algorithm 2 of Figure 17.

## Related Work

Since VICAUSE tackles missing value imputation and causal discovery simultaneously, we review the related work from both fields Moreover, we review recent works that utilize causality to improve the performance of another deep learning task, similar to VICAUSE.

Causal discovery. Randomized controlled trials are often not possible in real-world. Causal discovery aims to find causal relationships between variables from historical data without additional experiments. There are mainly three type of methods: constraint-based, score-based and functional causal models. Constraint-based ones exploit (conditional) independence tests to find the underlying causal structure, such as PC and Fast Causal Inference (FCI). They have recently been extended to handle partially observed data through test-wise deletion and adjustments. Score-based methods find the causal structure by optimizing a scoring function such as Greedy Equivalence Search (GES) and extensions. In functional causal models, the effect variable is represented as a function of the direct causes and some noise term, with different assumptions on the functional form and the noise. Traditional methods do not scale to large number of variables. Recently, continuous optimization of causal structures has become very popular within score-based methods. In particular, continuous optimization has been combined with GNNs to improve the performance of structural equation models (SEMs). VICAUSE also considers non-linear relationships through a GNN architecture. However, since it jointly learns to impute missing values, VICAUSE leverages a general GNN architecture based on message passing, which is not an extension of linear SEMs as in Eq.(3) of "Yu, Y., Chen, J., Gao, T., and Yu,M. (2019). Dag-gnn: Dag structure learning with graph neural networks. In Proceedings of the 36th International Conference on Machine Learning". Moreover, VICAUSE treats the graph of relationships in a fully probabilistic manner, handles missing values in the training data, and can deal with groups of variables of different sizes.

Causal deep learning. Continuous optimization of causal structures has been used to boost performance in classification. In CASTLE ["Kyono, T., Zhang, Y., and van der Schaar, M. (2020). Castle: Regularization via auxiliary causal graph discovery. In Larochelle, H., Ranzato, M., Hadsell, R., Balcan, M. F., and Lin, H., editors, Advances in Neural Information Processing Systems, volume 33, pages 1501-1512. Curran Associates, Inc.], structure learning is introduced as a regulariser for a deep learning classification model. This regulariser reconstructs only the most relevant causal features, leading to improved out-of-sample predictions. In SLAPS ["Gilmer, J., Schoenholz, S. S., Riley, P. F., Vinyals, O., and Dahl, G. E. (2017). Neural message passing for quantum chemistry. In International Conference on Machine Learning, pages 1263- 1272. PMLR"], the classification objective is supplemented with a self-supervised task that learns a graph of interactions between variables through a GNN. However, these works are focused on the supervised classification task and they did not advance the performance of causal discovery methods. Causal discovery has also been used within models that predict the dynamics of interacting systems with deep neural networks ["Kipf, T., Fetaya, E.,Wang,K.-C.,Welling,M., and Zemel,R. (2018). Neural relational inference for interacting systems. In International Conference on Machine Learning, pages 2688-2697.PMLR."]. Unlike VICAUSE, these approaches are developed for time series with Granger causality.

Missing values imputation. The relevance of missing data in real-world problems has motivated a long history of research. A popular approach is to estimate the missing values based on the observed ones through different techniques. Here, we find popular methods such as missforest, which relies on Random Forest, and MICE, which is based on Bayesian Ridge Regression. Also, the efficiency of amortized inference in generative models has motivated its use for missing values imputation. VICAUSE also leverages amortized inference, although the imputation is informed by the discovered causal relationships through a GNN.

## EXPERIMENTS

We evaluate the performance of VICAUSE in three different problems: a synthetic experiment where the data generation process is controlled, a semi-synthetic problem (simulated data from a real-world problem) with many more variables, and the real-world problem that motivated the development of the group-level extension.

Baselines. For the causal discovery task, we consider five baselines PC ["Spirtes, P., Glymour, C. N., Scheines, R., and Heckerman, D. (2000). Causation, prediction, and search. MITpress"] and GES["Chickering, D. M. (2002). Optimal structure identification with greedy search Journal of machine learning research, 3 (Nov):507-554".] are the most popular methods in constrained-based and score-based causal discovery approaches, respectively. We also consider three recent algorithms based on continuous optimization and deep learning: NOTEARS [Zheng, X., Aragam, B., Ravikumar, P., and Xing, E. P. (2018). DAGs with NO TEARS: Continuous Optimization for Structure Learning. In Advances in Neural Information Processing Systems], the non-linear (NL) extension of NOTEARS ["Zheng, X., Dan, C., Aragam, B., Ravikumar, P., and Xing, E. P. (2020). Learning sparse nonparametric DAGs. In International Conference on Artificial Intelligence and Statistics"], and DAG-GNN ["Yu, Y., Chen, J., Gao, T., and Yu,M. (2019). Dag-gnn: Dag structure learning with graph neural networks. In Proceedings of the 36th International Conference on Machine Learning"]. Unlike VICAUSE, these causality baselines cannot deal with missing values in the training data. Therefore, in the first two of the next three sections we work with fully observed training data. In contrast, the real-world data in the third section comes with partially observed training data, and the goal is to discover group-wise relationships. Thus the causality baselines cannot be used there, as they deal with variable-wise relationships only. For the missing data imputation task, we also consider five baselines Mean Imputing and Majority Vote are popular techniques used as reference, Missforest ["Stekhoven, D. J. and Bühlmann, P. (2012). Missforest-non-parametric missing value imputation for mixed-type data. Bioinformatics, 28(1):112-118"] and MICE ["Buuren, S. v. and Groothuis-Oudshoorn, K. (2010). mice: Multivariate imputation by chained equations in r. Journal of statistical software, pages 1-68"] are two of the most widely-used imputation algorithms, and PVAE ["Ma, C., Tschiatschek, S., Palla, K., Hernandez-Lobato, J. M., Nowozin, S., and Zhang, C. (2019). EDDI: Efficient dynamic discovery of high value information with partial VAE. In Chaudhuri, K. and Salakhutdinov, R., editors, Proceedings of the 36th International Conference on Machine Learning, volume 97 of Proceedings of Machine Learning Research, pages 4234-4243 PMLR"] is a recent algorithm based on amortized inference.

Metrics. Imputation performance is evaluated with standard metrics such as RMSE (for continuous variables) and accuracy (for categorical variables). For categorical variables, we also provide the area under the ROC and the Precision-Recall curves (AUROC and AUPR, respectively), which are especially useful for imbalanced data (such as that in Sec. 4.2). Regarding causal discovery, we consider both adjacency and orientation metrics as is common practice. Whereas the former do not take into account the direction of the edges, the latter do. For each metric (adjacency and orientation) we compute recall, precision and F1-score. We also provide causal accuracy, a popular metric introduced in "Claassen, T. and Heskes, T. (2012). A bayesian approach to constraint based causal inference. In Proceedings of the Twenty-Eighth Conference on Uncertainty in Artificial Intelligence pages 207-216" that takes into account edge orientation.

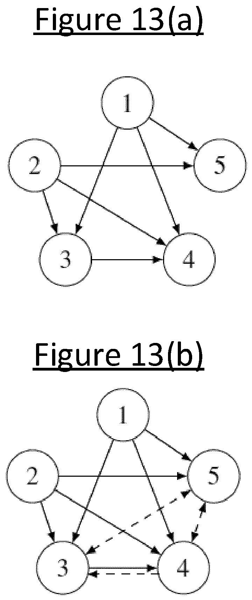

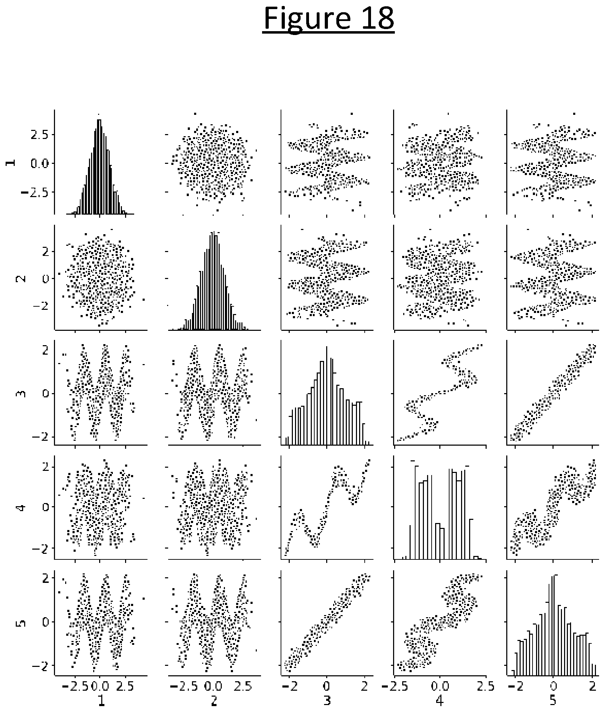

Synthetic experiment We simulate fifteen synthetic datasets. To understand how the number of variables affects VICAUSE, we use D = 5,7,9 variables (five datasets for each value of D) For each simulated dataset, we first sample the true causal structure G see Fig. 13(a) for an example. Then, the dataset samples are obtained. Each variable is computed from its parents through a non-linear mapping based on the sin function, see section A.1 and Fig. 18 in the appendix for additional details and a visualisation of the generated data, respectively. For each dataset, we simulate 5000 training and 1000 test samples.

Table 1 shows imputation results for the synthetic experiment. Mean and standard error over fifteen datasets.

**Table 1:**

|  | RMSE |
| --- | --- |
| Majority vote | 0.5442±0.0032 |
| Mean imputing | 0.2206±0.0061 |
| MICE | 0.1361±0.0046 |
| Missforest | 0.1313±0.0025 |
| PVAE | 0.1407±0.0043 |
| VICAUSE | **0.1196±0.0,024** |

Figure 13(a) shows a causal structure simulated for one of the synthetic datasets with 5 variables. Figure 13(b) shows a Graph predicted by VICAUSE (when the one on Figure 13(a) is used as the true one). VICAUSE predicts all the true relationships plus some additional ones (dashed edges).

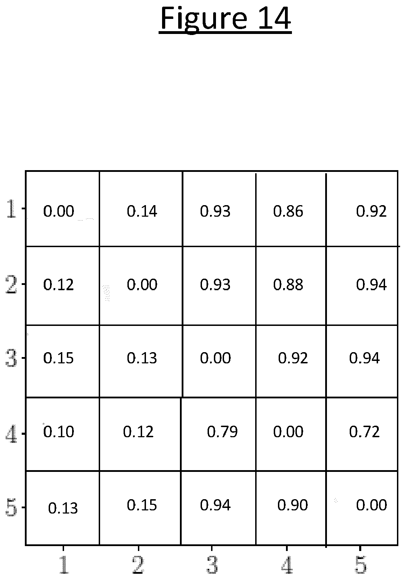

Figure 14 shows probability of edges obtained by VICAUSE in the synthetic experiment. By using a 0.5 threshold, we get the predicted graph in Fig. 13(b). The item (i,j) refers to the probability of the edge i→j.

Table 2 shows Causal discovery results for synthetic experiment (mean and std error over fifteen datasets.

**Table 2:**

| | Adjacency | | | Orientation | | | Causal accuracy |
|---|---|---|---|---|---|---|---|
| | Recall | Precision | $F_1$-score | Recall | Precision | $F_1$-score | |
| PC | 0.422±0.056 | 0.634±0.067 | 0.495±0.056 | 0.218±0.046 | 0.328±0.061 | 0.257±0.051 | 0.33±0.046 |
| GES | 0.452±0.044 | 0,569±0,036 | 0.491±0.038 | 0.249±0.046 | 0.305±0.053 | 0.270±0.049 | 0.364±0.045 |
| NOTEARS (L) | 0,193±0.028 | 0.443±0.059 | 0.265±0.036 | 0.149±0.023 | 0.367±0.060 | 0.209±0.032 | 0.149±0.023 |
| NOTEARS (NL) | 0.328±0.039 | 0.489±0.051 | 0.387±0.044 | 0.277±0.032 | **0.417±0.043** | 0.327±0.035 | 0.277±0.032 |
| DAG-GNN | 0.443±0.064 | 0.509±0.062 | 0.464±0.061 | 0.352±0.050 | 0.415±0.052 | 0.373±0.049 | 0.352±0.050 |
| VICAUSE | **0.843±0.043** | **0.679±0.0-37** | **0.740±0.033** | **0.520±0.067** | 0.414±0.058 | **0.454±0.060** | **0.726±0.069** |

<u>Imputation performance.</u> VICAUSE outperforms the baselines in terms of imputation, and this is consistent across all datasets with different number of variables, see Table 1. The results split by number of variables are shown in Table 8. Therefore, in addition to predicting the relationships between variables, VICAUSE exploits this information to obtain enhanced imputation.

<u>Causal discovery performance.</u> VICAUSE obtains better performance than the causality baselines, see Table 2. The results split by number of variables are shown in Table 10. Notice that NOTEARS (NL) is slightly better in terms of orientation-precision, i.e. the orientation of the edges that it predicts is slightly more reliable. However, this is at the expense of a significantly lower capacity to detect true edges, see the recall and the trade-off between both (F1-score). In this small synthetic experiment, it is possible to visually inspect the predicted graph. Fig. 14 shows the posterior probability of each edge (i.e. the estimated matrix G) for the simulated dataset that uses the true graph in Fig. 13(a). By using a threshold of 0.5, we obtain the predicted graph in Fig. 13(b). We observe that all the true edges are captured by VICAUSE, which also predicts some additional edges. Some of them can be explained by looking at the relationships between the corresponding variables, recall Fig.18 in the appendix. For instance, the one connecting the third and fifth variables can be explained through the linear relationship that exist between both variables.

**Neuropathic pain dataset**

<u>Motivation and dataset description.</u> This experiment extends the previous one in three directions. First, the relationships used are not synthetic, but instead come from a well-studied medical setting ["Tu, R., Zhang, K., Bertilson, B. C., Kjellström, H., and Zhang, C. (2019b). Neuropathic pain diagnosis simulator for causal discovery algorithm evaluation. In 33rd Conference on Neural Information Processing Systems (NeurIPS), DEC08-14, 2019, Vancouver, Canada, volume 32. Neural Information Processing Systems (NIPS)"]. Second, the number of variables considered is 222-significantly larger than before. Third, the variables are binary, rather than continuous. The dataset contains records of different patients regarding the diagnosis of symptoms associated to neuropathic pain. The train and test sets have 1000 and 500patients respectively, for which 222 binary variables have been measured (the value is 1 if the symptom is present for the patient and0otherwise). The data was generated with the Neuropathic Pain Diagnosis Simulator, whose properties have been evaluated from the medical and statistical perspectives.

Table 4 shows causal discovery results for neuropathic pain dataset (mean and std error over five runs).

**Table 4:**

| | Adjacency | | | Orientation | | | Causal Accuracy |
|---|---|---|---|---|---|---|---|
| | Recall | Precision | $F_1$-score | Recall | Precision | $F_1$-score | |
| PC | 0.046±0.001 | 0.375±0.006 | 0.082±0.001 | 0,024±0.001 | 0.199±0.011 | 0.044±0.002 | 0.058±0.003 |
| GES | 0.110±0.001 | 0.436±0.008 | 0.176±0.002 | 0082+0.001 | 0.323±0,009 | 0.131±0.003 | 0.121±0.001 |
| NOTEARS (L) | 0.006±0.000 | 0.011±0.001 | 0.008±0.000 | 0.001±0.000 | 0.001±0.001 | 0.001±0.000 | 0.001±0.000 |
| NOTEARS (NL) | 0.011±0.001 | **0.644±0.025** | 0.022±0.002 | 0.006±0.001 | 0.354±0.018 | 0.012±0.001 | O.006±0.001 |
| DAG-GNN | 0.129±0.028 | 0.272±0.101 | 0.128±0.027 | 0.051±0.010 | 0.126±0.059 | 0.050±0.007 | 0.051±0.010 |
| VICAUSE | **0.261±0.006** | 0.637±0.009 | **0.370±0.005** | **0.236±0.007** | **0.573±0.005** | **0.334±0.006** | **0.245±0.006** |

Table 5 shows average expert evaluation of the topic relationships found in Eedi. Cohen's $\kappa$ inter-annotator agreement is 0.72 for adjacency and 0.76 for orientation (substantial agreement.

**Table 5:**

|  | Adjacency | | Orientation | |
| --- | --- | --- | --- | --- |
|  | Expt 1 | Expt 2 | Expt 1 | Expt 2 |
| *Random* | 2.04 | 2.08 | 1.44 | 1.40 |
| DAG-GNN | 2.04 | 2.32 | 1.68 | 1.68 |
| VICAUSE | **3.60** | **3.70** | **2.76** | **2.60** |

Table 6 shows imputation results for Eedi topics dataset (mean and standard error over five runs).

**Table 6:**

|  | Accuracy | AUROC | AUPR |
| --- | --- | --- | --- |
| Majority vote | $0.6260 \pm 0.0000$ | $0.6208 \pm 0.0000$ | $0.7465 \pm 0.0000$ |
| Mean imputing | $0.6260 \pm 0.0000$ | $0.67\text{-}53 \pm 0.0000$ | $0.6906 \pm 0.0000$ |
| MICE | $0.6794 \pm 0.0005$ | $0.7453 \pm 0.0007$ | $0.7483 \pm 0.0010$ |
| Missforest | $0.6849 + 0.0005$ | $0.7219 \pm 0.0007$ | $0.7478 \pm 0.0008$ |
| PVAE | $0.7138 \pm 0.0005$ | $\mathbf{0.7852 \pm 0.0001}$ | $\mathbf{0.8204 \pm 0.0002}$ |
| VICAUSE | $\mathbf{0.7147 \pm 0.0007}$ | $0.7815 \pm 0.0008$ | $0.8179 \pm 0.0006$ |

Imputation performance. VICAUSE shows competitive or superior performance when compared to the baselines, see Table 3. Notice that AUROC and AUPR allow for an appropriate threshold-free assessment in this imbalanced scenario. Indeed, as expected from medical data, the majority of values are 0 (no symptoms); here it is around 92% of them in the test set. Interestingly, it is precisely in AUPR where the differences between VICAUSE and the rest of baselines are larger (except for MICE, whose performance is very similar to that of VICAUSE in this dataset).

Causality results. As in the synthetic experiment, VICAUSE outperforms the causal discovery baselines, see Table 4. Notice that NOTEARS (NL) is slightly better in terms of adjacency-precision, i.e. the edges that it predicts are slightly more reliable. However, this is at the expense of a significantly lower capacity to detect true edges, see the recall and the trade-off between both (F1-score).

## Eedi topics dataset

Motivation and dataset description. This experiment extends the previous ones in three directions. First, we tackle an important real-world problem in the field of AI-powered educational systems ["Wang, Z., Lamb, A., Saveliev, E., Cameron, P., Zaykov, Y., Hernandez-Lobato, J.M., Turner, R. E., Baraniuk, R. G., Barton, C., Jones, S. P., et al. (2021). Results and insights from diagnostic questions: The neurips 2020 education challenge. arXiv preprint arXiv:2104.0403439", "Wang, Z., Tschiatschek, S.,Woodhead, S., Hernandez-Lobato, J.M., Jones, S. P., Baraniuk, R. G., and Zhang, C. (2020). Educational question mining at scale: Prediction, analysis and personalization. arXiv preprint arXiv:2003.05980.]. Second, we are interested in relationships between groups of variables (instead of individual variables). Third, the training data is very sparse, with 25.9% observed values. The dataset contains the responses given by 6147 students to 948mathematics questions. The 948 variables are binary (1 if the student provided the correct answer and 0 otherwise). These 948 questions target very specific mathematical concepts, and they are grouped within a more meaningful hierarchy of topics, see Fig. 14. Here we apply the extension introduced above to find relationships between groups the topics). Specifically, we group the topics at the third level of the topic hierarchy (Fig. 14), resulting in 57 nodes in the GNN.

Imputation results VICAUSE achieves competitive or superior performance when compared to the baselines (Table 6). Although the dataset is relatively balanced (54% of the values are 1), we provide AUROC and AUPR for completeness. Notice that this setting is more challenging than the previous ones, since we learn relationships between groups of variables (topics). Indeed, whereas the group extension allows for more meaningful relationships, the information flow happens at a less granular level. Interestingly, even in this case. VICAUSE obtains similar or improved imputation results compared to the baselines.

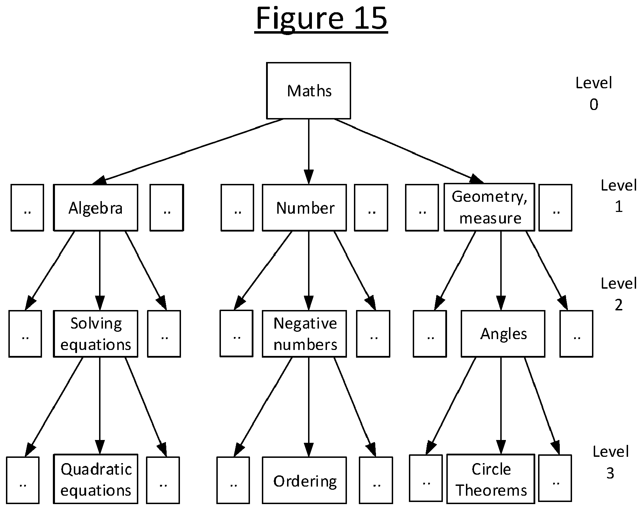

Figure 15 shows a hierarchy of topics in the Eedi topics dataset. All the questions are related to maths, which is the level 0 topic. The number of topics at levels 1, 2 and 3 is 3, 25 and 57, respectively. Each question is associated to only one topic at level 3 (and therefore to only one topic at any higher level).

Table 3 shows imputation results for neuropathic pain dataset (mean and standard error over five runs).

**Table 3:**

|  | Accuracy | AUROC | AUPR |
|---|---|---|---|
| Majority vote | $0.9268\pm0.0003$ | $0.5304\pm0.0003$ | $0.3366\pm0.0025$ |
| Mean imputing | $0.9268\pm0.0003$ | $0.8529\pm0.0012$ | $0.3262\pm0.0034$ |
| MICE | $0.9469\pm0.0007$ | $0.9319\pm0.0010$ | $0.6513\pm0.0046$ |
| Missforest | $0.9305\pm0.0004$ | $0.8915\pm0.0093$ | $0.5227\pm0.0033$ |
| PVAE | $0.9415\pm0.0003$ | $0.9270\pm0.0007$ | $0.5934\pm0.0046$ |
| VICAUSE | **$0.9471\pm0.0006$** | **$0.9392\pm0.0008$** | **$0.6597\pm0.0053$** |

Table 7 shows a Distribution of the relationships across level 1 topics (Number, Algebra, and Geometry). The item(i,j) refers to edges in the direction i→j. The proportion of relationships inside level 1 topics is 82%, 42% and 34%for VICAUSE, DAG-GNN and Random, respectively.

**Table 7:**

| VICAUSE | Number | Algebra | Geometry | DAG-GNN | Number | Algebra | Geometry | *Random* | Number | Algebra | Geometry |
|---|---|---|---|---|---|---|---|---|---|---|---|
| Number | 30 | 4 | 3 | Number | 8 | 3 | 6 | Number | 7 | 4 | 6 |
| Algebra | 2 | 6 | 0 | Algebra | 1 | 5 | 2 | Algebra | 8 | 1 | 6 |
| Geometry | 0 | 0 | 5 | Geometry | 14 | 7 | 11 | Geometry | 6 | 3 | 9 |

<u>Causal discovery results between groups</u>. Most of the baselines used so far cannot be applied here because i) they cannot learn relationships between groups of variables and ii) they cannot deal with partially observed training data. DAG-GNN is the only one that can be adapted to satisfy both properties. For the first one we adapt DAG-GNN following the same strategy as in VICAUSE, i.e. replacing missing values with a constant value. For the latter, notice that DAG-GNN can be used for vector-valued variables according to the original formulation. However, all of them need to have the same dimensionality. To cope with arbitrary groups, we apply the group-specific mappings (Eq. 10). Finally, to have an additional reference, we also compare with randomly generated relationships, which we will refer to as Random.

Importantly, this is a real-world dataset with no ground truth on the true relationships. Therefore, we asked two experts (experienced high school teachers working with the Eedi dataset) to assess the validity of the relationships found by VICAUSE, DAG-GNN and Random. For each relationship, they evaluated the adjacency (whether it is sensible to connect the two topics) and the orientation (whether the first one is a prerequisite for the second one). They provided an integer value from 1 (strongly disagree) to 5 (strongly agree), i.e. the higher the better. The complete list of relationships and expert evaluations for VICAUSE, DAG-GNN and Random can be found in Table 11, Table 12 and Table 13, respectively. As a summary, Table 5 shows here the average evaluations: we see that the relationships discovered by VICAUSE score much more highly across both metrics than the baseline models.

Another interesting aspect is how the relationships found between level-3 topics are distributed across higher-level topics (recall Fig. 4). Intuitively, it is expected that most of the relationships happen inside higher-level topics (e.g. Number-related concepts are more probably related to each other than to Geometry-related ones). Table 7 shows such a distribution for the compared methods. Indeed, notice that the percentage of inside-topic relationships is higher for VICAUSE (82%) and DAG-GNN (42%) than for Random (34%). An analogous analysis for the 25 level-2 topics is provided in the appendix, see Table 14 (VICAUSE), Table 15 (DAG-GNN), and Table 16 (Random). In particular, whereas 6% of the connections happen inside level 2 topics for Random, it is 14% for DAG-GNN and 36% for VICAUSE.

## Conclusion

We introduced VICAUSE, a novel approach that simultaneously performs causal discovery and learns to impute missing values. Both tasks are performed jointly: imputation is informed by the discovered relationships and vice-versa. This is achieved through a structured latent space and a GNN-based decoder. Namely, each variable has its own latent subspace, and the interactions between the latent subspaces are governed by the GNN through a (global) graph of relationships. Moreover, motivated by a real-world problem, VICAUSE is extended to learn the causal relationships among groups of variables (rather than variables themselves). VICAUSE fosters further research. In terms of causality, it would be interesting to carry out a theoretical analysis on identifiability sample complexity etc. In terms of missing values imputation, the quality of the predictions could be enhanced through a more advanced handling of missing data, beyond zero-imputation. For instance, techniques such as the set encoder used "Ma, C., Tschiatschek, S., Palla, K., Hernandez-Lobato, J. M., Nowozin, S., and Zhang, C. (2019). EDDI: Efficient dynamic discovery of high value information with partial VAE. In Chaudhuri, K. and Salakhutdinov, R., editors, Proceedings of the 36th International Conference on Machine Learning, volume 97 of Proceedings of Machine Learning Research, pages 4234-4243. PMLR" or PointNet ["Qi, C. R., Su, H.,Mo, K., and Guibas, L. J. (2017). Pointnet: Deep learning on point sets for 3d classification and segmentation In Proceedings of the IEEE conference on computer vision and pattern recognition, pages 652-660.", "Zaheer, M., Kottur, S., Ravanbakhsh, S., Poczos, B., Salakhutdinov, R. R., and Smola, A. J. (2017). Deepsets. In Guyon, I., Luxburg,U.V., Bengio, S.,Wallach, H., Fergus,R., Vishwanathan, S., and Garnett, R., editors, Advances in Neural Information Processing Systems, volume 30. Curran Associates, Inc"] could be adapted to the structured latent space defined by VICAUSE. In some examples, it is assumed that the data are missing at random.

## A Experimental details

Here we specify the complete experimental details for full reproducibility. We first provide all the details for the synthetic experiment (Sec. A.1). Then we explain the differences for the neuropathic pain and the Eedi topics experiments in Sec. A.2 and Sec. A.3, respectively.

### A.1 Synthetic experiment

<u>Data generation process</u>. We first sample the underlying true causal structure. An edge from variable i to variable j is sampled with probability 0.5 if $l < j$, and probability 0 if $l \geq j$ (this ensures that the true causal structure is a DAG, which is just a standard scenario, and not a requirement for any of the compared algorithms). Then, we generate the data points. Root nodes (i.e. nodes with no parents, like variables 1 and 2 in Fig. 2(a) in the paper) are sampled from N(0,1). Any other node vi is obtained from its parents Pa(i) as $\sum_{j \in Pa(i)} sin(3v_j) + \varepsilon$ where $\varepsilon \rightarrow$ N(0,0.01) is a Gaussian noise. We use the sin function to induce non-linear relationships between variables. Notice that the 3-times factor inside the sin encourages that the whole period of the sin function is used (to favor non-linearity). As an example of the data generation process, Fig. 17 shows the pair plot for the dataset generated from the graph in Fig. 13(a) in the paper.

<u>Model parameters</u>. We start by specifying the parameters associated to the generative process. We use a prior probability $p_{ij} = 0.05$ in $p(G)$ for all the edges. This favours sparse graphs, and can be adjusted depending on the problem at hand. The prior $p(Z)$ is a standard Gaussian distribution, i.e. $\sigma_z^2 = 1$. This provides a standard regularisation for the latent space. The output noise is set to $\sigma_z^2 = 0.02$, which favours the accurate reconstruction of samples. As for the decoder, we perform $T = 3$ iterations of GNN message passing. All the MLPs in the decoder (i.e. MLP$^f$, MLP$^b$, MLP$^{e2n}$ and g) have two linear layers with ReLU non-linearity. The dimensionality of the hidden layer, which is the dimensionality of each latent subspace, is 256. Regarding the encoder, it is given by a multi-head neural network that defines the mean and standard deviation of the latent representation. The neural network is a MLP with two standard linear layers with ReLu non-linearity. The dimension of the hidden layer is also 256. When using groups, there are as many such MLPs as groups. Finally, recall that the variational posterior $q(G)$ is the product of independent Bernoulli distributions over the edges, with a probability $G_{ij}$ to be estimated for each edge. These values are all initialised to $G_{ij} = 0.5$.

<u>Training hyperparameters</u>. We use Adam optimizer with learning rate 0.001. We train during 300 epochs with a batch size of 100 samples. Each one of the two stages described in the two-step training takes half of the epochs. The percentage of data dropped during training for each instance is sampled from a uniform distribution. When doing the reparametrization trick (i.e. when sampling from $Z_n$), we obtain 1 sample during training (100 samples in test time). For the Gumbel-softmax sample, we use a temperature $\tau = 0.5$. The rest of hyperparameters are the standard ones in torch.nn.functional.gumbel_softmax, in particular we use soft samples. To compute the DAG regulariser $R(G)$, we use the exponential matrix implementation in torch.matrix_exp. This is in contrast to previous approaches, which resort to approximations. When applying the encoder, missing values in the training data are replaced with the value 0 (continuous variables).

<u>Baselines details</u>. Regarding the causality baselines, we ran both PC and GES with the Causal Command tool offered by the Center for Causal Discoveryhttps://www.ccd.pitt.edu/tools/. We used the default parameters in each case (i.e. disc-bic-score for GES and cg-lr-test for PC). NOTEARS (L), NOTEARS (NL) and DAG-GNN were run with the code provided by the authors in GitHub: https://github.com/xunzheng/notears (NOTEARS (L) and NOTEARS (NL)) and https://github.com/fishmoon1234/DAG-GNN (DAG-GNN). In all cases, we used the default parameters proposed by the authors. Regarding the imputation baselines, MajorityVote and Mean Imputing were implemented in Python. MICE and Missforest were used from Scikit-learn library with default parameters https://scikit-learn.org/stable/modules/generated/sklearn.impute.IterativeImputer.html#sklearn.impute. IterativeImputer. For PVAE, we use the authors implementation with their proposed parameters, see https://github.com/microsoft/EDDI.

<u>Other experimental details</u>. VICAUSE is implemented in PyTorch. The code is available in the Supplementary material. The experiments were run using a local Tesla K80 GPU and a compute cluster provided by Azure Machine Learning platform with NVIDIA Tesla V 100 GPU.

## A.2 Neuropathic pain experiment

**Data generation process.** We use the Neuropathic Pain Diagnosis Simulator in https://github.com/TURuibo/Neuropathic-Pain-Diagnosis-Simulator. We simulate five datasets with 1500 samples, and split each one randomly in 1000 training and 500 test samples. These five datasets are used for the five independent runs described above.

**Model and training hyperparameters.** Most of the hyperparameters are identical to the synthetic experiment. However, in this case we have to deal with 222 variables, many more than before. In particular, the number of possible edges is 49062. Therefore, we reduce the dimensionality of each latent subspace to 32, the batch size to 25, and the amount of test samples for Zn to 10 (in training we still use 1 as before). Moreover, we reduce the initial posterior probability for each edge to 0:2. The reason is that, for 0:5 initialization, the DAG regulariser $R(G)$ evaluates to extremely high and unstable values for the 222 x 222 matrix. Since this is a more complex problem (no synthetic generation), we run the algorithm for 1000 epochs. When applying the encoder, missing values in the training data are replaced with the value 0:5 (binary variables).

## A.3 Eedi topics experiment

**Data generation process.** The real-world Eedi topics dataset contains 6147 samples. We use a random 80%-10%-10% train-validation-test split. The validation set is used to perform Bayesian Optimization (BO) as described below. The five runs reported in the experimental section come from different initializations for the model parameters.

**Model and training hyperparameters.** Here, we follow the same specifications as in the neuropathic pain dataset. The only difference is that we perform BO for three hyperparameters: the dimensionality of the latent subspaces, the number of GNN message passing iterations, and the learning rate. The possible choices for each hyperparameter are [5; 10; 15; 20; 25; 30; 35; 40; 45; 50], [3; 5; 8; 10; 12; 14; 16; 18; 20], and [$10^{-4}$; $10^{-3}$; $10^{-2}$] respectively. We perform 39 runs of BO with the hyperdrive package in Azure Machine Learning platform https://docs.microsoft.com/en-us/python/api/azureml-train-core/azureml.train.hyperdrive?view=azure-ml-py. We use validation accuracy as the target metric. The best configuration obtained through BO was 15, 8 and $10^{-4}$, respectively.

**Baselines details.** As explained above, in this experiment DAG-GNN is adapted to deal with missing values and groups of arbitrary size. For the former, we adapt the DAG-GNN code to replace missing values with 0:5 constant value, as in VICAUSE. For the latter, we also follow VICAUSE and use as many different neural networks as groups, all of them with the same architecture as the one used in the original code (https://github.com/fishmoon1234/DAG-GNN).

**Other experimental details.** The list of relationships found by VICAUSE (Table 11) and DAG-GNN (Table 12) aggregates the relationships obtained in the five independent runs. This is done by setting a threshold of 0:35 on the posterior probability of edge (which is initialized to 0:2) and considering the union for the different runs. This resulted in 50 relationships for VICAUSE and 57 for DAG-GNN. For Random, we simulated 50 random relationships. Also, the probability reported in the first column of Table 11 is the average of the probabilities obtained for that relationship in the five different runs.

Figure 18 shows a pair-plot for the dataset generated from the graph in Fig. 13(a). We observe different type of relationships between variables, including non-linear ones.

Table 8 shows imputation results for the synthetic experiment in terms of RMSE (not aggregating by number of variables, D = 5; 7; 9). The values are the mean and standard error over five different simulations.

Table 8:

| | Number of variables | | | Average |
|---|---|---|---|---|
| | 5 | 7 | 9 | |
| Majority vote | $0.5507 \pm 0.0056$ | $0.5391 \pm 0.0050$ | $0.5427 \pm 0.0050$ | $0.5442 \pm 0.0032$ |
| Mean imputing | $0.2351 \pm 0.0104$ | $0.2124 \pm 0.0112$ | $0.2143 \pm 0.0064$ | $0.2206 \pm 0.0061$ |
| MICE | $0.1352 \pm 0.0044$ | $0.1501 \pm 0.0095$ | $0.1230 \pm 0.0025$ | $0.1361 \pm 0.0046$ |
| Missforest | $0.1279 \pm 0.0040$ | $0.1403 \pm 0.0030$ | $0.1258 \pm 0.0022$ | $0.1313 \pm 0.0025$ |
| PVAE | $0.1324 \pm 0.0048$ | $0.1536 \pm 0.0095$ | $0.1360 \pm 0.0019$ | $0.1407 \pm 0.0043$ |
| VICAUSE | **0.1146±0.0026** | **0.1251±0.0055** | **0.1191±0.0015** | **0.1196±0.0024** |

Table 9 shows a mapping between indexes for row/column names in Table 14 and Table 16 and the actual level-2 topic names.

Table 9:

| Index | Topic name |
|---|---|
| 1 | Decimals |
| 2 | Factors, Multiples and Primes |
| 3 | Fractions, Decimals and Percentage Equivalence |
| 4 | Fractions |
| 5 | Indices, Powers and Roots |
| 6 | Negative Numbers |
| 7 | Straight Line Graphs |
| 8 | Inequalities |
| 9 | Sequences |
| 10 | Writing and Simplifying Expressions |
| 11 | Angles |
| 12 | Circles |
| 13 | Co-ordinates |
| 14 | Construction, Loci and Scale Drawing |
| 15 | Symmetry |
| 16 | Units of Measurement |
| 17 | Volume and Surface Area |

(continued)

| Index | Topic name |
|---|---|
| 18 | Basic Arithmetic |
| 19 | Factorising |
| 20 | Solving Equations |
| 21 | Formula |
| 22 | 2D Names and Properties of Shapes |
| 23 | Perimeter and Area |
| 24 | Similarity and Congruency |
| 25 | Transformations |

Table 10 shows causality results for the synthetic experiment (not aggregating by number of variables, $D = 5$; $7$; $9$). The values are the mean and standard error over five different simulations.

Table 10:

| | | Adjacency | | | Orientation | | | Causal Accuracy |
|---|---|---|---|---|---|---|---|---|
| | | Recall | Precision | $F_1$-score | Recall | Precision | $F_1$-score | |
| 5 | PC | 0.464±0.099 | 0.610±0.117 | 0.526±0.107 | 0.364±0.098 | 0.490±0.127 | 0.416±0.111 | 0.416+0.076 |
| | GES | 0.414±0.067 | 0.507±0.071 | 0.446±0.065 | 0.257±0.103 | 0.327±0.117 | 0.285±0.110 | 0.368±0.072 |
| | NOTEARS (L) | 0.186+0.052 | 0.400±0.089 | 0.247±0.063 | 0.119±0.049 | 0.300±0.110 | 0.167±0.065 | 0.119±0.049 |
| | NOTEARS (NL) | 0.331±0.057 | 0.470±0.078 | 0.384±0.065 | 0.264±0.047 | 0.370±0.053 | 0.304±0.049 | 0.264±0.047 |
| | DAG-GNN | 0.381+0.130 | 0.433±0.121 | 0.399±0.127 | 0.231±0.067 | 0.283±0.073 | 0.249±0.068 | 0.231±0.067 |
| | VICAUSE | 0.971±0.026 | 0.598±0.059 | 0.730±0.047 | 0.574±0.111 | 0.356±0.085 | 0.432±0.093 | 0.971±0.026 |
| 7 | PC | 0.396±0.110 | 0.639±0.154 | 0.468±0.112 | 0.113±0.043 | 0.193±0.083 | 0.134±0.050 | 0.324±0.088 |
| | GES | 0.429±0.087 | 0.647±0.042 | 0.501±0.076 | 0.208±0.067 | 0.279±0.081 | 0.235±0.073 | 0.345±0.091 |
| | NOTEARS (L) | 0.222±0.059 | 0.526±0.124 | 0.309±0.078 | 0.176±0.041 | 0.436±0.109 | 0.248±0.058 | 0.176±0.041 |
| | NOTEARS (NL) | 0.315±0.094 | 0.513±0.119 | 0.382±0.104 | 0.260±0.074 | 0.453±0.105 | 0.330±0.084 | 0.269±0.074 |
| | DAG-GNN | 0.396±0.109 | 0.539±0.123 | 0.446±0.111 | 0.318±0.082 | 0.445±0.102 | 0.351±0.085 | 0.31B±0.082 |
| | VICAUSE | 0.813±0.088 | 0.694±0.057 | 0.725±0.053 | 0.559±0.134 | 0.447±0.070 | 0.480±0.089 | 0.701±0.103 |
| 9 | PC | 0.406±0.072 | 0.654±0.053 | 0.491±0.060 | 0.176±0.020 | 0.302±0.045 | 0.219±0.024 | 0.229±0.041 |
| | GES | 0.514±0.065 | 0.553±0.050 | 0.525±0.049 | 0.282±0.057 | 0.308±0.068 | 0.291±0.061 | 0.379±0.069 |
| | NOTEARS (L) | 0.172±0.026 | 0.403±0.076 | 0.238±0.036 | 0.151±0.023 | 0.366±0.082 | 0.211+0.935 | 0.151±0.023 |
| | NOTEARS (NL) | 0.339±0.042 | 0.485±0.053 | 0.394±0.045 | 0.297±0.034 | 0.429±0.044 | 0.347±0.036 | 0.297±0.034 |
| | DAG-GNN | 0.551±0.067 | 0.554±0.053 | 0.547±0.057 | 0.508±0.061 | 0.516±0.054 | 0.508±0.055 | 0.508±0.061 |
| | VICAUSE | 0.705±0.061 | 0.615±0.042 | 0.652±0.044 | 0.356±0.092 | 0.297±0.065 | 0.322±0.076 | 0.526±0.081 |

Table 11 shows a Full list of relationships found by VICAUSE in the Eedi topics dataset. Each row refers to one relationship (one edge). From left to right, the columns are the posterior probability of the edge, the sending node (topic), the receiving node (topic), and the adjacency and orientation evaluations from each expert. For each topic, the brackets contain its parent level 2 and level 1 topics.

Table 11:

| Prob | Topic 1 (from) | Topic 2 (to) | Adj1 | Ori1 | Adj2 | Ori2 |
|---|---|---|---|---|---|---|
| 0.44 | Adding and Subtracting Negative Numbers [Negative Numbers] [Number] | Ordering Negative Numbers [Negative Numbers] [Number] | 5 | 1 | 5 | 1 |
| 0.38 | Mental Multiplication and Division [Basic Arithmetic] [Number] | Multiples and Lowest Common Multiple [Factors, Multiples and Primes] [Number] | 5 | 5 | 5 | 5 |
| 0.37 | Mental Multiplication and Division [Basic Arithmetic] [Number] | Factors and Highest Common Factor [Factors, Multiples and Primes] [Number] | 5 | 5 | 5 | 5 |
| 0.37 | Adding and Subtracting Negative Numbers [Negative Numbers] [Number] | Multiples and Lowest Common Multiple [Factors, Multiples and Primes] [Number] | 2 | 2 | 2 | 1 |
| 0.36 | Adding and Subtracting Negative Numbers [Negative Numbers] [Number] | Factors and Highest Common Factor [Factors, Multiples and Primes] [Number] | 2 | 1 | 2 | 1 |
| 0.35 | Mental Multiplication and Division [Basic Arithmetic] [Number] | Place Value [Basic Arithmetic] [Number] | 4 | 2 | 4 | 2 |
| 0.35 | Mental Multiplication and Division [Basic Arithmetic] [Number] | BIDMAS [Basic Arithmetic] [Number] | 5 | 5 | 5 | 5 |
| 0.35 | Adding and Subtracting Negative Numbers [Negative Numbers] [Number] | Simplifying Expressions by Collecting Like Terms [Writing and Simplifying Expressions] [Algebra] | 5 | 5 | 5 | 5 |
| 0.35 | Adding and Subtracting Negative Numbers [Negative Numbers] [Number] | BIDMAS [Basic Arithmetic] [Number] | 4 | 4 | 4 | 3 |
| 0.35 | Adding and Subtracting Negative Numbers [Negative Numbers] [Number] | Multiplying and Dividing Negative Numbers [Negative Numbers] [Number] | 4 | 4 | 5 | 4 |
| 0.35 | Mental Multiplication and Division [Basic Arithmetic] [Number] | Squares, Cubes, etc [Indices, Powers and Roots] [Number] | 5 | 5 | 5 | 5 |
| 0.34 | Factors and Highest Common Factor [Factors, Multiples and Primes] [Number] | Mental Multiplication and Division [Basic Arithmetic] [Number] | 5 | 1 | 5 | 1 |
| 0.34 | Basic Angle Facts (straight line, opposite, around a point, etc) [Angles] [Geometry and Measure] | Angle Facts with Parallel Lines [Angles] [Geometry and Measure] | 4 | 4 | 4 | 4 |
| 0.34 | Multiplying and Dividing Negative Numbers [Negative Numbers] [Number] | Adding and Subtracting Negative Numbers [Negative Numbers] [Number] | 4 | 2 | 5 | 2 |
| 0.34 | Writing Expressions [Writing and Simplifying Expressions] [Algebra] | Simplifying Expressions by Collecting Like Terms [Writing and Simplifying Expressions] [Algebra] | 5 | 2 | 5 | 2 |
| 0.34 | Adding and Subtracting Negative Numbers [Negative Numbers] [Number] | Squares, Cubes, etc [Indices, Powers and Roots] [Number] | 2 | 2 | 2 | 2 |
| 0.33 | Ordering Negative Numbers [Negative Numbers] [Number] | Adding and Subtracting Negative Numbers [Negative Numbers] [Number] | 5 | 5 | 5 | 5 |
| 0.33 | Basic Angle Facts (straight line, opposite, around a point, etc) [Angles] [Geometry and Measure] | Measuring Angles [Angles] [Geometry and Measure] | 3 | 2 | 5 | 2 |
| 0.33 | Simplifying Expressions by Collecting Like Terms [Writing and Simplifying Expressions] [Algebra] | Writing Expressions [Writing and Simplifying Expressions] [Algebra] | 4 | 4 | 4 | 4 |
| 0.33 | Measuring Angles [Angles] [Geometry and Measure] | Basic Angle Facts (straight line, opposite, around a point, etc) [Angles] [Geometry and Measure] | 3 | 3 | 5 | 3 |
| 0.33 | Adding and Subtracting Negative Numbers [Negative Numbers] [Number] | Place Value [Basic Arithmetic] [Number] | 4 | 1 | 4 | 1 |
| 0.33 | Adding and Subtracting Negative Numbers [Negative Numbers] [Number] | Prime Numbers and Prime Factors [Factors, Multiples and Primes] [Number] | 2 | 2 | 2 | 1 |
| 0.33 | Multiplying and Dividing Negative Numbers [Negative Numbers] [Number] | BIDMAS [Basic Arithmetic] [Number] | 4 | 4 | 4 | 4 |
| 0.32 | Factors and Highest Common Factor [Factors, Multiples and Primes] [Number] | BIDMAS [Basic Arithmetic] [Number] | 3 | 2 | 3 | 2 |
| 0.32 | Mental Multiplication and Division [Basic Arithmetic] [Number] | Prime Numbers and Prime Factors [Factors, Multiples and Primes] [Number] | 5 | 5 | 5 | 5 |
| 0.32 | Adding and Subtracting Negative Numbers [Negative Numbers] [Number] | Mental Multiplication and Division [Basic Arithmetic] [Number] | 2 | 1 | 2 | 1 |
| 0.32 | Factors and Highest Common Factor [Factors, Multiples and Primes] [Number] | Multiples and Lowest Common Multiple [Factors, Multiples and Primes] [Number] | 3 | 3 | 3 | 3 |
| 0.32 | Linear Equations [Solving Equations] [Algebra] | Substitution into Formula [Formula] [Algebra] | 4 | 2 | 4 | 2 |
| 0.32 | Factors and Highest Common Factor [Factors, Multiples and Primes] [Number] | Squares, Cubes, etc [Indices, Powers and Roots] [Number] | 3 | 2 | 3 | 2 |
| 0.32 | Angle Facts with Parallel Lines [Angles] [Geometry and Measure] | Basic Angle Facts (straight line, opposite, around a point, etc) [Angles] [Geometry and Measure] | 4 | 2 | 4 | 2 |
| 0.32 | Simplifying Expressions by Collecting Like Terms [Writing and Simplifying Expressions] [Algebra] | Substitution into Formula [Formula] [Algebra] | 2 | 2 | 2 | 2 |
| 0.32 | Writing Expressions [Writing and Simplifying Expressions] [Algebra] | Substitution into Formula [Formula] [Algebra] | 4 | 3 | 4 | 3 |
| 0.32 | Mental Multiplication and Division [Basic Arithmetic] [Number] | Time [Units of Measurement] [Geometry and Measure] | 4 | 4 | 4 | 4 |
| 0.32 | Multiplying and Dividing Negative Numbers [Negative Numbers] [Number] | Ordering Negative Numbers [Negative Numbers] [Number] | 4 | 2 | 4 | 2 |
| 0.32 | Adding and Subtracting Negative Numbers [Negative Numbers] [Number] | Substitution into Formula [Formula] [Algebra] | 5 | 5 | 5 | 5 |
| 0.32 | Multiplying and Dividing Negative Numbers [Negative Numbers] [Number] | Prime Numbers and Prime Factors [Factors, Multiples and Primes] [Number] | 2 | 1 | 2 | 1 |
| 0.31 | Factors and Highest Common Factor [Factors, Multiples and Primes] [Number] | Prime Numbers and Prime Factors [Factors, Multiples and Primes] [Number] | 5 | 5 | 5 | 5 |
| 0.31 | Basic Angle Facts (straight line, opposite, around a point, etc) [Angles] [Geometry and Measure] | Types, Naming and Estimating [Angles] [Geometry and Measure] | 4 | 2 | 5 | 2 |
| 0.31 | Ordering Negative Numbers [Negative Numbers] [Number] | Multiplying and Dividing Negative Numbers [Negative Numbers] [Number] | 4 | 4 | 4 | 4 |
| 0.31 | Substitution into Formula [Formula] [Algebra] | Writing Expressions [Writing and Simplifying Expressions] [Algebra] | 4 | 3 | 4 | 3 |
| 0.31 | Adding and Subtracting Negative Numbers [Negative Numbers] [Number] | Writing Expressions [Writing and Simplifying Expressions] [Algebra] | 2 | 2 | 2 | 1 |
| 0.31 | BIDMAS [Basic Arithmetic] [Number] | Place Value [Basic Arithmetic] [Number] | 4 | 2 | 4 | 1 |
| 0.31 | Multiples and Lowest Common Multiple [Factors, Multiples and Primes] [Number] | Mental Multiplication and Division [Basic Arithmetic] [Number] | 4 | 2 | 4 | 2 |
| 0.31 | Multiplying and Dividing Negative Numbers [Negative Numbers] [Number] | Factors and Highest Common Factor [Factors, Multiples and Primes] [Number] | 4 | 2 | 4 | 2 |
| 0.30 | Simplifying Expressions by Collecting Like Terms [Writing and Simplifying Expressions] [Algebra] | Multiplying and Dividing Negative Numbers [Negative Numbers] [Number] | 2 | 2 | 1 | 1 |
| 0.30 | Adding and Subtracting Negative Numbers [Negative Numbers] [Number] | Time [Units of Measurement] [Geometry and Measure] | 2 | 2 | 2 | 2 |
| 0.30 | Ordering Negative Numbers [Negative Numbers] [Number] | Substitution into Formula [Formula] [Algebra] | 3 | 3 | 2 | 2 |
| 0.30 | Adding and Subtracting Negative Numbers [Negative Numbers] [Number] | Angles in Polygons [Angles] [Geometry and Measure] | 1 | 1 | 1 | 1 |
| 0.30 | Factors and Highest Common Factor [Factors, Multiples and Primes] [Number] | Place Value [Basic Arithmetic] [Number] | 3 | 2 | 3 | 1 |
| 0.28 | Simplifying Expressions by Collecting Like Terms [Writing and Simplifying Expressions] [Algebra] | Mental Multiplication and Division [Basic Arithmetic] [Number] | 2 | 1 | 2 | 1 |

Table 12 shows a full list of relationships found by DAG-GNN in the Eedi topics dataset. Each row refers to one relationship (one edge). From left to right, the columns are the sending node (topic), the receiving node (topic), and the adjacency and orientation evaluations from each expert. For each topic, the brackets contain its parent level 2 and level 1 topics.

Table 12:

| Topic 1 (From) | Topic 2 (To) | Adj1 | Ori1 | Adj2 | Ori2 |
|---|---|---|---|---|---|
| Missing Lengths [Perimeter and Area] [Geometry and Measure] | Midpoint Between Two Co-ordinates [Co-ordinates] [Algebra] | 4 | 4 | 4 | 5 |
| Construct Triangle [Construction, Loci and Scale Drawing] [Geometry and Measure] | Place Value [Basic Arithmetic] [Number] | 1 | 1 | 1 | 1 |
| Squares, Cubes, etc [Indices, Powers and Roots] [Number] | Volume of Prisms [Volume and Surface Area] [Geometry and Measure] | 4 | 5 | 5 | 4 |
| Converting between Fractions and Percentages [Fractions, Decimals and Percentage Equivalence] [Number] | Volume of Prisms [Volume and Surface Area] [Geometry and Measure] | 1 | 1 | 1 | 1 |
| Angles in Triangles [Angles] [Geometry and Measure] | Parts of a Circle [Circles] [Geometry and Measure] | 1 | 1 | 1 | 1 |
| Types, Naming and Estimating [Angles] [Geometry and Measure] | Angle Facts with Parallel Lines [Angles] [Geometry and Measure] | 4 | 5 | 5 | 5 |
| Mental Multiplication and Division [Basic Arithmetic] [Number] | Measuring Angles [Angles] [Geometry and Measure] | 1 | 1 | 1 | 1 |
| Angles in Polygons [Angles] [Geometry and Measure] | Compound Area [Perimeter and Area] [Geometry and Measure] | 1 | 1 | 1 | 1 |
| Squares, Cubes, etc [Indices, Powers and Roots] [Number] | Solving Linear Inequalities [Inequalities] [Algebra] | 2 | 1 | 3 | 1 |
| Construct Triangle [Construction, Loci and Scale Drawing] [Geometry and Measure] | Solving Linear Inequalities [Inequalities] [Algebra] | 1 | 1 | 1 | 1 |
| Written Multiplication [Basic Arithmetic] [Number] | Translation and Vectors [Transformations] [Geometry and Measure] | 1 | 1 | 1 | 1 |
| Enlargement [Transformations] [Geometry and Measure] | Reflection [Transformations] [Geometry and Measure] | 5 | 2 | 5 | 3 |
| Rotation [Transformations] [Geometry and Measure] | Reflection [Transformations] [Geometry and Measure] | 4 | 3 | 5 | 2 |
| Construct Angle and Line Bisectors [Construction, Loci and Scale Drawing] [Geometry and Measure] | Length Scale Factors in Similar Shapes [Similarity and Congruency] [Geometry and Measure] | 1 | 1 | 2 | 1 |
| Angles in Triangles [Angles] [Geometry and Measure] | Properties of Quadrilaterals [2D Names and Properties of Shapes] [Geometry and Measure] | 4 | 3 | 5 | 3 |
| Naming Co-ordinates in 2D [Co-ordinates] [Algebra] | Properties of Quadrilaterals [2D Names and Properties of Shapes] [Geometry and Measure] | 1 | 1 | 3 | 1 |
| Adding and Subtracting Negative Numbers [Negative Numbers] [Number] | Properties of Quadrilaterals [2D Names and Properties of Shapes] [Geometry and Measure] | 1 | 1 | 1 | 1 |
| Construct Angle and Line Bisectors [Construction, Loci and Scale Drawing] [Geometry and Measure] | Properties of Quadrilaterals [2D Names and Properties of Shapes] [Geometry and Measure] | 1 | 1 | 1 | 1 |
| Written Multiplication [Basic Arithmetic] [Number] | Perimeter [Perimeter and Area] [Geometry and Measure] | 2 | 1 | 2 | 1 |
| Basic Angle Facts (straight line, opposite, around a point, etc) [Angles] [Geometry and Measure] | Perimeter [Perimeter and Area] [Geometry and Measure] | 2 | 1 | 4 | 1 |
| Naming Co-ordinates in 2D [Co-ordinates] [Algebra] | Area of Simple Shapes [Perimeter and Area] [Geometry and Measure] | 1 | 1 | 1 | 1 |
| Types, Naming and Estimating [Angles] [Geometry and Measure] | Writing Expressions [Writing and Simplifying Expressions] [Algebra] | 1 | 1 | 1 | 1 |
| Substitution into Formula [Formula] [Algebra] | Writing Expressions [Writing and Simplifying Expressions] [Algebra] | 4 | 2 | 3 | 1 |
| Naming Co-ordinates in 2D [Co-ordinates] [Algebra] | Linear Equations [Solving Equations] [Algebra] | 1 | 1 | 1 | 1 |
| Multiples and Lowest Common Multiple [Factors, Multiples and Primes] [Number] | Factorising into a Single Bracket [Factorising] [Algebra] | 4 | 5 | 5 | 4 |
| Linear Equations [Solving Equations] [Algebra] | Factorising into a Single Bracket [Factorising] [Algebra] | 4 | 3 | 5 | 3 |
| Converting between Fractions and Decimals [Fractions, Decimals and Percentage Equivalence] [Number] | BIDMAS [Basic Arithmetic] [Number] | 1 | 1 | 1 | 1 |
| Reflection [Transformations] [Geometry and Measure] | Place Value [Basic Arithmetic] [Number] | 1 | 1 | 1 | 1 |
| Length, Area and Volume Scale Factors [Similarity and Congruency] [Geometry and Measure] | Mental Multiplication and Division [Basic Arithmetic] [Number] | 5 | 1 | 4 | 1 |
| Naming Co-ordinates in 2D [Co-ordinates] [Algebra] | Midpoint Between Two Co-ordinates [Co-ordinates] [Algebra] | 5 | 5 | 5 | 5 |
| Enlargement [Transformations] [Geometry and Measure] | Time [Units of Measurement] [Geometry and Measure] | 1 | 1 | 1 | 1 |
| Rotational Symmetry [Symmetry] [Geometry and Measure] | Midpoint Between Two Co-ordinates [Co-ordinates] [Algebra] | 1 | 1 | 2 | 1 |
| Factors and Highest Common Factor [Factors, Multiples and Primes] [Number] | Horizontal and Vertical Lines [Straight Line Graphs] [Algebra] | 1 | 1 | 1 | 1 |
| Angles in Triangles [Angles] [Geometry and Measure] | Simplifying Expressions by Collecting Like Terms [Writing and Simplifying Expressions] [Algebra] | 1 | 1 | 1 | 1 |
| Naming Co-ordinates in 2D [Co-ordinates] [Algebra] | Simplifying Expressions by Collecting Like Terms [Writing and Simplifying Expressions] [Algebra] | 1 | 1 | 1 | 1 |
| Rotational Symmetry [Symmetry] [Geometry and Measure] | Simplifying Expressions by Collecting Like Terms [Writing and Simplifying Expressions] [Algebra] | 1 | 1 | 1 | 1 |
| Types, Naming and Estimating [Angles] [Geometry and Measure] | Simplifying Expressions by Collecting Like Terms [Writing and Simplifying Expressions] [Algebra] | 1 | 1 | 1 | 1 |
| Equivalent Fractions [Fractions] [Number] | Converting Mixed Number and Improper Fractions [Fractions] [Number] | 5 | 5 | 5 | 5 |
| Multiplying and Dividing with Decimals [Decimals] [Number] | Prime Numbers and Prime Factors [Factors, Multiples and Primes] [Number] | 1 | 1 | 1 | 1 |
| Construct Angle and Line Bisectors [Construction, Loci and Scale Drawing] [Geometry and Measure] | Prime Numbers and Prime Factors [Factors, Multiples and Primes] [Number] | 1 | 1 | 1 | 1 |
| Construct Angle [Construction, Loci and Scale Drawing] [Geometry and Measure] | Prime Numbers and Prime Factors [Factors, Multiples and Primes] [Number] | 1 | 1 | 1 | 1 |
| Types, Naming and Estimating [Angles] [Geometry and Measure] | Prime Numbers and Prime Factors [Factors, Multiples and Primes] [Number] | 1 | 1 | 1 | 1 |
| Angle Facts with Parallel Lines [Angles] [Geometry and Measure] | Factors and Highest Common Factor [Factors, Multiples and Primes] [Number] | 1 | 1 | 1 | 1 |
| Measuring Angles [Angles] [Geometry and Measure] | Factors and Highest Common Factor [Factors, Multiples and Primes] [Number] | 1 | 1 | 1 | 1 |
| Simplifying Expressions by Collecting Like Terms [Writing and Simplifying Expressions] [Algebra] | Adding and Subtracting Negative Numbers [Negative Numbers] [Number] | 5 | 1 | 4 | 5 |
| Squares, Cubes, etc [Indices, Powers and Roots] [Number] | Adding and Subtracting Negative Numbers [Negative Numbers] [Number] | 1 | 1 | 3 | 1 |
| Multiplying and Dividing Negative Numbers [Negative Numbers] [Number] | Adding and Subtracting Negative Numbers [Negative Numbers] [Number] | 5 | 2 | 5 | 1 |
| Ordering Negative Numbers [Negative Numbers] [Number] | Adding and Subtracting Negative Numbers [Negative Numbers] [Number] | 5 | 5 | 5 | 5 |
| Rotation [Transformations] [Geometry and Measure] | Adding and Subtracting Negative Numbers [Negative Numbers] [Number] | 1 | 1 | 3 | 1 |
| Reflection [Transformations] [Geometry and Measure] | Adding and Subtracting Negative Numbers [Negative Numbers] [Number] | 1 | 1 | 3 | 1 |
| Perimeter [Perimeter and Area] [Geometry and Measure] | Adding and Subtracting Negative Numbers [Negative Numbers] [Number] | 1 | 1 | 1 | 1 |
| Types, Naming and Estimating [Angles] [Geometry and Measure] | Adding and Subtracting Negative Numbers [Negative Numbers] [Number] | 1 | 1 | 1 | 1 |
| Converting between Fractions and Percentages [Fractions, Decimals and Percentage Equivalence] [Number] | Ordering Negative Numbers [Negative Numbers] [Number] | 1 | 1 | 1 | 1 |
| Construct Angle and Line Bisectors [Construction, Loci and Scale Drawing] [Geometry and Measure] | Ordering Negative Numbers [Negative Numbers] [Number] | 1 | 1 | 1 | 1 |
| Perimeter [Perimeter and Area] [Geometry and Measure] | Ordering Negative Numbers [Negative Numbers] [Number] | 1 | 1 | 1 | 1 |
| Construct Angle and Line Bisectors [Construction, Loci and Scale Drawing] [Geometry and Measure] | Time [Units of Measurement] [Geometry and Measure] | 1 | 1 | 1 | 1 |
| Written Multiplication [Basic Arithmetic] [Number] | BIDMAS [Basic Arithmetic] [Number] | 5 | 4 | 5 | 3 |

Table 13 shows a full list of relationships found by Random in the Eedi topics dataset. Each row refers to one relationship (one edge). From left to right, the columns are the sending node (topic), the receiving node (topic), and the adjacency and orientation evaluations from each expert. For each topic, the brackets contain its parent level 2 and level 1 topics.

Table 13:

| Topic 1 (From) | Topic 2 (To) | Adj1 | Ori1 | Adj2 | Ori2 |
|---|---|---|---|---|---|
| Midpoint Between Two Co-ordinates [Co-ordinates] [Algebra] | Angles in Triangles [Angles] [Geometry and Measure] | 1 | 1 | 1 | 1 |
| Solving Linear Inequalities [Inequalities] [Algebra] | Enlargement [Transformations] [Geometry and Measure] | 1 | 1 | 1 | 1 |
| Squares, Cubes, etc [Indices, Powers and Roots] [Number] | Written Multiplication [Basic Arithmetic] [Number] | 4 | 1 | 5 | 1 |
| Substitution into Formula [Formula] [Algebra] | Written Multiplication [Basic Arithmetic] [Number] | 4 | 1 | 3 | 1 |
| Linear Sequences (nth term) [Sequences] [Algebra] | Mental Multiplication and Division [Basic Arithmetic] [Number] | 5 | 1 | 5 | 2 |
| Measuring Angles [Angles] [Geometry and Measure] | Construct Angle [Construction, Loci and Scale Drawing] [Geometry and Measure] | 5 | 5 | 5 | 5 |
| Dividing Fractions [Fractions] [Number] | Volume of Prisms [Volume and Surface Area] [Geometry and Measure] | 2 | 2 | 2 | 2 |
| Multiplying and Dividing Negative Numbers [Negative Numbers] [Number] | Parts of a Circle [Circles] [Geometry and Measure] | 1 | 1 | 1 | 1 |
| Types, Naming and Estimating [Angles] [Geometry and Measure] | Parts of a Circle [Circles] [Geometry and Measure] | 2 | 2 | 2 | 1 |
| Angles in Polygons [Angles] [Geometry and Measure] | Basic Angle Facts (straight line, opposite, around a point, etc) [Angles] [Geometry and Measure] | 5 | 1 | 5 | 1 |
| Angles in Polygons [Angles] [Geometry and Measure] | Compound Area [Perimeter and Area] [Geometry and Measure] | 1 | 1 | 1 | 1 |
| Length, Area and Volume Scale Factors [Similarity and Congruency] [Geometry and Measure] | Linear Sequences (nth term) [Sequences] [Algebra] | 1 | 1 | 2 | 1 |
| Substitution into Formula [Formula] [Algebra] | Rotation [Transformations] [Geometry and Measure] | 1 | 1 | 1 | 1 |
| Adding and Subtracting Negative Numbers [Negative Numbers] [Number] | Gradient Between Two Co-ordinates [Co-ordinates] [Algebra] | 5 | 5 | 5 | 5 |
| Compound Area [Perimeter and Area] [Geometry and Measure] | Reflection [Transformations] [Geometry and Measure] | 1 | 1 | 1 | 1 |
| BIDMAS [Basic Arithmetic] [Number] | Reflection [Transformations] [Geometry and Measure] | 1 | 1 | 1 | 1 |
| Adding and Subtracting Negative Numbers [Negative Numbers] [Number] | Properties of Quadrilaterals [2D Names and Properties of Shapes] [Geometry and Measure] | 1 | 1 | 1 | 1 |
| Compound Area [Perimeter and Area] [Geometry and Measure] | Properties of Quadrilaterals [2D Names and Properties of Shapes] [Geometry and Measure] | 3 | 1 | 3 | 1 |
| Rotational Symmetry [Symmetry] [Geometry and Measure] | Perimeter [Perimeter and Area] [Geometry and Measure] | 3 | 1 | 3 | 1 |
| Converting between Fractions and Percentages [Fractions, Decimals and Percentage Equivalence] [Number] | Area of Simple Shapes [Perimeter and Area] [Geometry and Measure] | 1 | 1 | 1 | 1 |
| Angles in Triangles [Angles] [Geometry and Measure] | Types, Naming and Estimating [Angles] [Geometry and Measure] | 4 | 3 | 5 | 2 |
| Length Scale Factors in Similar Shapes [Similarity and Congruency] [Geometry and Measure] | Types, Naming and Estimating [Angles] [Geometry and Measure] | 1 | 1 | 1 | 1 |
| Factorising into a Single Bracket [Factorising] [Algebra] | Types, Naming and Estimating [Angles] [Geometry and Measure] | 1 | 1 | 1 | 1 |
| Enlargement [Transformations] [Geometry and Measure] | BIDMAS [Basic Arithmetic] [Number] | 1 | 1 | 1 | 1 |
| Linear Sequences (nth term) [Sequences] [Algebra] | Time [Units of Measurement] [Geometry and Measure] | 1 | 1 | 1 | 1 |
| Horizontal and Vertical Lines [Straight Line Graphs] [Algebra] | Adding and Subtracting Negative Numbers [Negative Numbers] [Number] | 1 | 1 | 1 | 1 |
| Area of Simple Shapes [Perimeter and Area] [Geometry and Measure] | Multiplying and Dividing Negative Numbers [Negative Numbers] [Number] | 1 | 1 | 1 | 1 |
| Writing Expressions [Writing and Simplifying Expressions] [Algebra] | Factors and Highest Common Factor [Factors, Multiples and Primes] [Number] | 1 | 1 | 1 | 1 |
| Squares, Cubes, etc [Indices, Powers and Roots] [Number] | Midpoint Between Two Co-ordinates [Co-ordinates] [Algebra] | 1 | 1 | 1 | 1 |
| Writing Expressions [Writing and Simplifying Expressions] [Algebra] | Naming Co-ordinates in 2D [Co-ordinates] [Algebra] | 1 | 1 | 1 | 1 |
| BIDMAS [Basic Arithmetic] [Number] | Line Symmetry [Symmetry] [Geometry and Measure] | 1 | 1 | 1 | 1 |
| Simplifying Expressions by Collecting Like Terms [Writing and Simplifying Expressions] [Algebra] | Length, Area and Volume Scale Factors [Similarity and Congruency] [Geometry and Measure] | 1 | 1 | 1 | 1 |
| Converting Mixed Number and Improper Fractions [Fractions] [Number] | Horizontal and Vertical Lines [Straight Line Graphs] [Algebra] | 1 | 1 | 1 | 1 |
| Construct Angle and Line Bisectors [Construction, Loci and Scale Drawing] [Geometry and Measure] | Horizontal and Vertical Lines [Straight Line Graphs] [Algebra] | 1 | 1 | 1 | 1 |
| Multiplying and Dividing with Decimals [Decimals] [Number] | Simplifying Expressions by Collecting Like Terms [Writing and Simplifying Expressions] [Algebra] | 1 | 1 | 1 | 1 |
| Reflection [Transformations] [Geometry and Measure] | Simplifying Expressions by Collecting Like Terms [Writing and Simplifying Expressions] [Algebra] | 1 | 1 | 1 | 1 |
| Substitution into Formula [Formula] [Algebra] | Dividing Fractions [Fractions] [Number] | 4 | 1 | 3 | 1 |
| Factorising into a Single Bracket [Factorising] [Algebra] | Dividing Fractions [Fractions] [Number] | 2 | 1 | 2 | 1 |
| Fractions of an Amount [Fractions] [Number] | Multiplying Fractions [Fractions] [Number] | 5 | 4 | 5 | 2 |
| Time [Units of Measurement] [Geometry and Measure] | Converting Mixed Number and Improper Fractions [Fractions] [Number] | 4 | 1 | 4 | 1 |
| Length Scale Factors in Similar Shapes [Similarity and Congruency] [Geometry and Measure] | Converting Mixed Number and Improper Fractions [Fractions] [Number] | 4 | 1 | 5 | 1 |
| Place Value [Basic Arithmetic] [Number] | Equivalent Fractions [Fractions] [Number] | 4 | 4 | 3 | 5 |
| Reflection [Transformations] [Geometry and Measure] | Equivalent Fractions [Fractions] [Number] | 1 | 1 | 1 | 1 |
| Writing Expressions [Writing and Simplifying Expressions] [Algebra] | Fractions of an Amount [Fractions] [Number] | 1 | 1 | 1 | 1 |
| Dividing Fractions [Fractions] [Number] | Prime Numbers and Prime Factors [Factors, Multiples and Primes] [Number] | 1 | 1 | 1 | 1 |
| Adding and Subtracting Fractions [Fractions] [Number] | Prime Numbers and Prime Factors [Factors, Multiples and Primes] [Number] | 1 | 1 | 1 | 1 |
| Simplifying Expressions by Collecting Like Terms [Writing and Simplifying Expressions] [Algebra] | Multiples and Lowest Common Multiple [Factors, Multiples and Primes] [Number] | 1 | 1 | 1 | 1 |
| Adding and Subtracting Fractions [Fractions] [Number] | Multiples and Lowest Common Multiple [Factors, Multiples and Primes] [Number] | 1 | 1 | 2 | 1 |
| Mental Multiplication and Division [Basic Arithmetic] [Number] | Multiples and Lowest Common Multiple [Factors, Multiples and Primes] [Number] | 5 | 5 | 5 | 5 |
| Length Scale Factors in Similar Shapes [Similarity and Congruency] [Geometry and Measure] | BIDMAS [Basic Arithmetic] [Number] | 1 | 1 | 1 | 1 |

Table 14 shows how the 50 relationships found by VICAUSE are distributed across level 2 topics. The item (i; j) refers to edges in the direction i → j. There are 18 relationships inside level 2 topics (36%). See Table 9 for a mapping between indexes shown here in row/column names and the actual level-2 topic names. Table 14:

|    | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
|----|---|---|---|---|---|---|---|---|---|----|----|----|----|----|----|----|----|----|----|----|----|----|----|----|----|
| 1  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2  | 0 | 2 | 0 | 0 | 1 | 0 | 0 | 0 | 0 | 0 | 0 | 0 | 0 | 0 | 0 | 0 | 0 | 4 | 0 | 0 | 0 | 0 | 0 | 0 | 0 |
| 3  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 4  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 5  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 6  | 0 | 5 | 0 | 0 | 1 | 6 | 0 | 0 | 0 | 2 | 1 | 0 | 0 | 0 | 0 | 1 | 0 | 4 | 0 | 0 | 2 | 0 | 0 | 0 | 0 |
| 7  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 8  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 9  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 10 | 0 | 0 | 0 | 0 | 0 | 1 | 0 | 0 | 0 | 2 | 0 | 0 | 0 | 0 | 0 | 0 | 0 | 1 | 0 | 0 | 2 | 0 | 0 | 0 | 0 |
| 11 | 0 | 0 | 0 | 0 | 0 | 0 | 0 | 0 | 0 | 0 | 5 | 0 | 0 | 0 | 0 | 0 | 0 | 0 | 0 | 0 | 0 | 0 | 0 | 0 | 0 |
| 12 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 13 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 14 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 15 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 16 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 17 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 18 | 0 | 3 | 0 | 0 | 1 | 0 | 0 | 0 | 0 | 0 | 0 | 0 | 0 | 0 | 0 | 1 | 0 | 3 | 0 | 0 | 0 | 0 | 0 | 0 | 0 |
| 19 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 20 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 |
| 21 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 |
| 22 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 23 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 24 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 25 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

Table 15 shows how the 57 relationships found by DAG-GNN are distributed across level 2 topics. The item (i; j) refers to edges in the direction i → j. There are 8relationships inside level 2 topics (14%). See Table 9 for a mapping between indexes shown here in row/column names and the actual level-2 topic names.

Table 15:

|    | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
|----|---|---|---|---|---|---|---|---|---|----|----|----|----|----|----|----|----|----|----|----|----|----|----|----|----|
| 1  | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2  | 0 | 0 | 0 | 0 | 0 | 0 | 1 | 0 | 0 | 0 | 0 | 0 | 0 | 0 | 0 | 0 | 0 | 0 | 1 | 0 | 0 | 0 | 0 | 0 | 0 |
| 3  | 0 | 0 | 0 | 0 | 0 | 1 | 0 | 0 | 0 | 0 | 0 | 0 | 0 | 0 | 0 | 0 | 1 | 1 | 0 | 0 | 0 | 0 | 0 | 0 | 0 |
| 4  | 0 | 0 | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 5  | 0 | 0 | 0 | 0 | 0 | 1 | 0 | 1 | 0 | 0 | 0 | 0 | 0 | 0 | 0 | 0 | 1 | 0 | 0 | 0 | 0 | 0 | 0 | 0 | 0 |
| 6  | 0 | 0 | 0 | 0 | 0 | 2 | 0 | 0 | 0 | 0 | 0 | 0 | 0 | 0 | 0 | 0 | 0 | 0 | 0 | 0 | 0 | 1 | 0 | 0 | 0 |
| 7  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 8  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 9  | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 10 | 0 | 0 | 0 | 0 | 0 | 1 | 0 | 0 | 0 | 0 | 0 | 0 | 0 | 0 | 0 | 0 | 0 | 0 | 0 | 0 | 0 | 0 | 0 | 0 | 0 |
| 11 | 0 | 3 | 0 | 0 | 0 | 1 | 0 | 0 | 0 | 3 | 1 | 1 | 0 | 0 | 0 | 0 | 0 | 0 | 0 | 0 | 0 | 1 | 2 | 0 | 0 |
| 12 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 13 | 0 | 0 | 0 | 0 | 0 | 0 | 0 | 0 | 0 | 1 | 0 | 0 | 1 | 0 | 0 | 0 | 0 | 0 | 0 | 1 | 0 | 1 | 1 | 0 | 0 |
| 14 | 0 | 2 | 0 | 0 | 0 | 1 | 0 | 1 | 0 | 0 | 0 | 0 | 0 | 0 | 0 | 1 | 0 | 1 | 0 | 0 | 0 | 1 | 0 | 1 | 0 |
| 15 | 0 | 0 | 0 | 0 | 0 | 0 | 0 | 0 | 0 | 1 | 0 | 0 | 1 | 0 | 0 | 0 | 0 | 0 | 0 | 0 | 0 | 0 | 0 | 0 | 0 |
| 16 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 17 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 18 | 0 | 0 | 0 | 0 | 0 | 0 | 0 | 0 | 0 | 0 | 1 | 0 | 0 | 0 | 0 | 0 | 0 | 1 | 0 | 0 | 0 | 0 | 1 | 0 | 1 |
| 19 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 20 | 0 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 |
| 21 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 |
| 22 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 23 | 0 | 0 | 0 | 0 | 0 | 2 | 0 | 0 | 0 | 0 | 0 | 0 | 1 | 0 | 0 | 0 | 0 | 0 | 0 | 0 | 0 | 0 | 0 | 0 | 0 |
| 24 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 0 | 0 |
| 25 | 0 | 0 | 0 | 0 | 0 | 2 | 0 | 0 | 0 | 0 | 0 | 0 | 0 | 0 | 0 | 1 | 0 | 1 | 0 | 0 | 0 | 0 | 0 | 0 | 2 |

Table 16 shows how the 50 relationships found by Random are distributed across level 2 topics. The item (i; j) refers to edges in the direction i → j. There are 3 relationships inside level 2 topics (6%). See Table 9 for a mapping between indexes shown here in row/column names and the actual level-2 topic names.

Table 16:

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
|---|---|---|---|---|---|---|---|---|---|---|---|---|---|---|---|---|---|---|---|---|---|---|---|---|---|
| 1 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 |
| 2 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 3 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 |
| 4 | 0 | 3 | 0 | 1 | 0 | 0 | 1 | 0 | 0 | 0 | 0 | 0 | 0 | 0 | 0 | 0 | 1 | 0 | 0 | 0 | 0 | 0 | 0 | 0 | 0 |
| 5 | 0 | 0 | 0 | 0 | 0 | 0 | 0 | 0 | 0 | 0 | 0 | 0 | 0 | 1 | 0 | 0 | 0 | 0 | 1 | 0 | 0 | 0 | 0 | 0 | 0 |
| 6 | 0 | 0 | 0 | 0 | 0 | 0 | 0 | 0 | 0 | 0 | 0 | 0 | 1 | 1 | 0 | 0 | 0 | 0 | 0 | 0 | 0 | 0 | 1 | 0 | 0 |
| 7 | 0 | 0 | 0 | 0 | 0 | 1 | 0 | 0 | 0 | 0 | 0 | 0 | 0 | 0 | 0 | 0 | 0 | 0 | 0 | 0 | 0 | 0 | 0 | 0 | 0 |
| 8 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 |
| 9 | 0 | 0 | 0 | 0 | 0 | 0 | 0 | 0 | 0 | 0 | 0 | 0 | 0 | 0 | 0 | 1 | 0 | 1 | 0 | 0 | 0 | 0 | 0 | 0 | 0 |
| 10 | 0 | 2 | 0 | 1 | 0 | 0 | 0 | 0 | 0 | 0 | 0 | 0 | 1 | 0 | 0 | 0 | 0 | 0 | 0 | 0 | 0 | 0 | 0 | 1 | 0 |
| 11 | 0 | 0 | 0 | 0 | 0 | 0 | 0 | 0 | 0 | 0 | 2 | 1 | 0 | 1 | 0 | 0 | 0 | 0 | 0 | 0 | 0 | 0 | 1 | 0 | 0 |
| 12 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 13 | 0 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 | 0 |
| 14 | 0 | 0 | 0 | 0 | 0 | 0 | 1 | 0 | 0 | 0 | 0 | 0 | 0 | 0 | 0 | 0 | 0 | 0 | 0 | 0 | 0 | 0 | 0 | 0 | 0 |
| 15 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 0 |
| 16 | 0 | 0 | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 |
| 17 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 18 | 0 | 1 | 0 | 1 | 0 | 0 | 0 | 0 | 0 | 0 | 0 | 0 | 0 | 0 | 1 | 0 | 0 | 0 | 0 | 0 | 0 | 0 | 0 | 0 | 1 |
| 19 | 0 | 0 | 0 | 1 | 0 | 0 | 0 | 0 | 0 | 0 | 1 | 0 | 0 | 0 | 0 | 0 | 0 | 0 | 0 | 0 | 0 | 0 | 0 | 0 | 0 |
| 20 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 21 | 0 | 0 | 0 | 1 | 0 | 0 | 0 | 0 | 0 | 0 | 0 | 0 | 0 | 0 | 0 | 0 | 0 | 1 | 0 | 0 | 0 | 0 | 0 | 0 | 1 |
| 22 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 23 | 0 | 0 | 0 | 0 | 0 | 1 | 0 | 0 | 0 | 0 | 0 | 0 | 0 | 0 | 0 | 0 | 0 | 0 | 0 | 0 | 0 | 1 | 0 | 0 | 1 |
| 24 | 0 | 0 | 0 | 1 | 0 | 0 | 0 | 0 | 1 | 0 | 1 | 0 | 0 | 0 | 0 | 0 | 0 | 1 | 0 | 0 | 0 | 0 | 0 | 0 | 0 |
| 25 | 0 | 0 | 0 | 1 | 0 | 0 | 0 | 0 | 0 | 1 | 0 | 0 | 0 | 0 | 0 | 0 | 0 | 1 | 0 | 0 | 0 | 0 | 0 | 0 | 0 |

More generally, according to one aspect disclosed herein, there is provided computer-implemented method, the method comprising: receiving an input vector comprising values of variables; using a first neural network to encode the variables of the input vector into a plurality of latent vectors; inputting the plurality of latent vectors into a second neural network comprising a graph neural network, wherein the graph neural network is parametrized by a graph comprising edge probabilities indicating causal relationships between the variables, in order to determine a computed vector value; and tuning the edge probabilities of the graph, one or more parameters of the first neural network and one or more parameters of the second neural network to minimise a loss function, wherein the loss function comprises a measure of difference between the input vector and the computed vector value and a function of the graph.

In embodiments, the method of the above aspect is repeated for a plurality of further input vectors to provide further tuning of the edge probabilities of the graph and one or more parameters of the neural network.

In embodiments, the method comprises: after tuning the edge probabilities of the graph, the one or more parameters of the first neural network and the one or more parameters of the second neural network, setting the edge probabilities of the graph and the one or more parameters of the first neural network and the one more parameters of the second neural network; receiving a further input vector comprising the variables of the input vector, the further input vector having at least one missing value for at least one of the variables and at least one observed value for at least one of the variables; and applying the first neural network and the second neural network to the further input vector to obtain the at least one missing value.

In embodiments, the function of the graph penalizes cyclical relationships by increasing the loss function.

In embodiments, the function of the graph comprises a measure of a difference between two distributions, wherein the first distribution is an estimate of a posterior function of the graph and the second distribution is a predefined user function of the graph.

In embodiments, the loss function only operates on variables that are present in the input vector.

In embodiments, wherein the using the first neural network to encode the variables of the input vectors into the plurality of latent vectors comprises: using the first neural network to encode each variable of the input vector into a respective latent vector.

In embodiments, the method comprises: organizing the variables into a number of groups, wherein the number of groups is less than a number of variables in the input vector, and wherein the using the first neural network to encode the variables of the input vectors into the plurality of latent vectors comprises: using the first neural network to encode each group into a respective latent vector.

Each group may comprise one or more related variables.

The variables may comprise one or more data values representing sensor values of one or more devices.

The one or more devices may comprise a health monitoring device for monitoring a patient and wherein the tuning the edge probabilities of the graph function provides causal relationships between a plurality of health conditions, wherein the method comprises:

using the causal relationships to diagnose a patient.

In embodiments, the one or more devices comprises a health monitoring device for monitoring a patient and the method comprises: after tuning the edge probabilities of the graph, the one or more parameters of the first neural network and the one more parameters of the second neural network, setting the edge probabilities of the graph and the one or more parameters of the first neural network and the one more parameters of the second neural network; receiving a further input vector comprising the variables of the input vector, the further input vector having at least one missing value for at least one of the variables and at least one observed value for at least one of the variables; and applying the first neural network and the second neural network to the further input vector to obtain the at least one missing value, the missing value representing a health condition.

In embodiments, tuning the edge probabilities of the graph function provides causal relationships between a plurality of sensor measurements; and the method comprises: using the causal relationships to determine one or more faults in the one or more devices.

In embodiments, the method comprises: after tuning the edge probabilities of the graph, the one or more parameters of the first neural network and the one more parameters of the second neural network, setting the edge probabilities of the graph and the one or more parameters of the first neural network and the one more parameters of the second neural network; receiving a further input vector comprising the variables of the input vector, the further input vector having at least one missing value for at least one of the variables and at least one observed value for at least one of the variables; applying the first neural network and the second neural network to the further input vector to obtain the at least one missing value, the missing value representing a state of the device; and using the missing value to determine a fault in the one or more devices.

According to another aspect disclosed herein, there may be provided a computer program embodied on computer-readable storage, the program comprising code configured so as when run on one or more processors to perform the operations of any method disclosed herein.

According to another aspect disclosed herein, there is provided a computer system comprising: storage comprising one or more memory units, and processing apparatus comprising one or more processing units; wherein the storage stores code arranged to run on the processing apparatus, the code being configured so as when thus run to perform the operations of any method disclosed herein.

Other variants and applications of the disclosed techniques may become apparent to a skilled person once given the disclosure herein. The scope of the present disclosure is not limited by the described embodiments but only by the accompanying claims.

Other variants and applications of the disclosed techniques may become apparent to a skilled person once given the disclosure herein. The scope of the present disclosure is not limited by the described embodiments but only by the accompanying claims.

**Claims**

1. A computer-implemented method comprising:

   receiving an input vector comprising values of variables;
   using a first neural network to encode the variables of the input vector into a plurality of latent vectors;
   inputting the plurality of latent vectors into a second neural network comprising a graph neural network, wherein the graph neural network is parametrized by a graph comprising edge probabilities indicating causal relationships between the variables, in order to determine a computed vector value; and
   tuning the edge probabilities of the graph, one or more parameters of the first neural network and one or more parameters of the second neural network to minimise a loss function, wherein the loss function comprises a measure of difference between the input vector and the computed vector value and a function of the graph.

2. A method according to claim 1, wherein the method of claim 1 is repeated for a plurality of further input vectors to provide further tuning of the edge probabilities of the graph and one or more parameters of the neural network.

3. A method according to claim 1 or claim 2, wherein the method comprises:

   after tuning the edge probabilities of the graph, the one or more parameters of the first neural network and the one or more parameters of the second neural network, setting the edge probabilities of the graph and the one or more parameters of the first neural network and the one more parameters of the second neural network;
   receiving a further input vector comprising the variables of the input vector, the further input vector having at least one missing value for at least one of the variables and at least one observed value for at least one of the variables; and

applying the first neural network and the second neural network to the further input vector to obtain the at least one missing value.

4. A method according to any preceding claim, wherein the function of the graph penalizes cyclical relationships by increasing the loss function.

5. A method according to any preceding claim, wherein the function of the graph comprises a measure of a difference between two distributions, wherein the first distribution is an estimate of a posterior function of the graph and the second distribution is a predefined user function of the graph.

6. A method according to any preceding claim, wherein the loss function only operates on variables that are present in the input vector.

7. A method according to any preceding claim, wherein the using the first neural network to encode the variables of the input vectors into the plurality of latent vectors comprises: using the first neural network to encode each variable of the input vector into a respective latent vector.

8. A method according to any of claims 1 to 6, comprising:

organizing the variables into a number of groups, wherein the number of groups is less than a number of variables in the input vector, and wherein the using the first neural network to encode the variables of the input vectors into the plurality of latent vectors comprises:

using the first neural network to encode each group into a respective latent vector.

9. A method as claimed in claim 8, wherein each group comprises one or more related variables.

10. A method as claimed in any preceding claim, wherein the variables comprise one or more data values representing sensor values of one or more devices.

11. A method as claimed in claim 10, wherein:

the one or more devices comprise a health monitoring device for monitoring a patient and wherein the tuning the edge probabilities of the graph function provides causal relationships between a plurality of health conditions, wherein the method comprises:

using the causal relationships to diagnose a patient.

12. A method as claimed in claim 10 or claim 11, wherein the one or more devices comprises a health monitoring device for monitoring a patient and wherein the method comprises:

after tuning the edge probabilities of the graph, the one or more parameters of the first neural network and the one more parameters of the second neural network, setting the edge probabilities of the graph and the one or more parameters of the first neural network and the one more parameters of the second neural network; receiving a further input vector comprising the variables of the input vector, the further input vector having at least one missing value for at least one of the variables and at least one observed value for at least one of the variables; and applying the first neural network and the second neural network to the further input vector to obtain the at least one missing value, the missing value representing a health condition.

13. A method as claimed in claim 10, wherein the tuning the edge probabilities of the graph function provides causal relationships between a plurality of sensor measurements; and wherein the method comprises:

using the causal relationships to determine one or more faults in the one or more devices.

14. A method as claimed in claim 10 or claim 13, wherein the method comprises:

after tuning the edge probabilities of the graph, the one or more parameters of the first neural network and the one more parameters of the second neural network, setting the edge probabilities of the graph and the one or more parameters of the first neural network and the one more parameters of the second neural network;

receiving a further input vector comprising the variables of the input vector, the further input vector having at least one missing value for at least one of the variables and at least one observed value for at least one of the variables;

applying the first neural network and the second neural network to the further input vector to obtain the at least one missing value, the missing value representing a state of the device; and

using the missing value to determine a fault in the one or more devices.

15. A computer program embodied on computer-readable storage, the program comprising code configured so as when run on one or more processors to perform the operations of any preceding claim.

# Figure 1(a)

# Figure 1(b)

## Figure 1(c)

Input vector X [ ]

108

Deep neural network

Classification Y

## Figure 2

200

206

Machine learning algorithm

ML model

208

204

Controller

Interface

202

# Figure 3

# Figure 4

208

208q
(inference
network, i.e.
encoder)

208p
(generative
network, i.e.
decoder)

X

$\phi_{1,1}$ $\phi_{1,2}$ ...

$\phi_{2,1}$ $\phi_{2,2}$ ...

Z

$\theta_{1,1}$ $\theta_{1,2}$ ...

$\theta_{2,1}$ $\theta_{2,2}$ ...

X

# Figure 5

Feature vector

520

Feature d

| | Gender | Age | Diabetes | Sugar Intake |
|---|---|---|---|---|
| User 1 | F | 28 | Y | High |
| User 2 | M | 81 | Y | Zero |
| User 3 | F | ? | N | Medium |
| User 4 | ? | ? | Y | ? |
| ⋮ | | | | |
| ⋮ | | | | |
| ⋮ | | | | |

Data point i

# Figure 6(a)

621

626a

622a

Gender

Age

628a

624a

Sugar Intake

Diabetes

# Figure 6(b)

| | Gender | Age | Diabetes | Sugar Intake |
|---|---|---|---|---|
| Gender | 0 | 0 | 0 | 1 |
| Age | 0 | 0 | 1 | 1 |
| Diabetes | 0 | 0 | 0 | 0 |
| Sugar Intake | 0 | 0 | 1 | 0 |

622a 622a 626a 628a 630a

626a

628a

630a

# Figure 7(a)

# Figure 7(b)

|  | Gender | Age | Diabetes | Sugar Intake |
|---|---|---|---|---|
| Gender | 0 | 0 | 0 | 0.4 |
| Age | 0 | 0 | 0.7 | 0.3 |
| Diabetes | 0 | 0 | 0 | 0 |
| Sugar Intake | 0 | 0 | 0.9 | 0 |

## Figure 8(a)

831

830 — A

832 — B

## Figure 8(b)

| | 830 A | 832 B |
|---|---|---|
| 830 A | 0 | 1 |
| 832 B | 1 | 0 |

# Figure 9

# Figure 10

# <u>Figure 11</u>

1150

Receiving an input vector comprising
values of variables

1152

Using a first neural network to encode
the variables of the input vector into a
plurality of latent vectors

1154

Inputting the plurality of latent vectors
into a second neural network comprising a
graph neural network, wherein the graph
neural network is parametrized by a graph
comprising edge probabilities indicating
causal relationships between the
variables, in order to determine a
computed vector value

1156

Tuning the edge probabilities of the
graph, one or more parameters of the first
neural network and one or more
parameters of the second neural network
to minimise a loss function, wherein the
loss function comprises a measure of
difference between the input vector and
the computed vector value and a function
of the graph

# Figure 12(a)

# Figure 12(b)

$$n = 1, \ldots, N$$

# Figure 13(a)

# Figure 13(b)

# Figure 14

| | 1 | 2 | 3 | 4 | 5 |
|---|---|---|---|---|---|
| 1 | 0.00 | 0.14 | 0.93 | 0.86 | 0.92 |
| 2 | 0.12 | 0.00 | 0.93 | 0.88 | 0.94 |
| 3 | 0.15 | 0.13 | 0.00 | 0.92 | 0.94 |
| 4 | 0.10 | 0.12 | 0.79 | 0.00 | 0.72 |
| 5 | 0.13 | 0.15 | 0.94 | 0.90 | 0.00 |

# Figure 15

Level 0

Maths

Level 1

.. | Algebra | .. | .. | Number | .. | .. | Geometry, measure | ..

Level 2

.. | Solving equations | .. | .. | Negative numbers | .. | .. | Angles | ..

Level 3

.. | Quadratic equations | .. | .. | Ordering | .. | .. | Circle Theorems | ..

# Figure 16

**Algorithm 1** Generative process

$$\mathbf{G}_{ij} \sim \text{Bernoulli}(p_{ij})$$
$$\textbf{for } n \in \{1, 2, \cdots, N\} \textbf{ do}$$
$$\quad \mathbf{Z}_n \sim \mathcal{N}(0, \sigma_z^2 \mathbf{I})$$
$$\quad \mathbf{x}_n \sim \mathcal{N}(f_\theta(\mathbf{Z}_n, \mathbf{G}), \sigma_x^2 \mathbf{I})$$

# Figure 17

**Algorithm 2** Training VICAUSE.

**Input** : Training dataset $\mathbf{X}$, possibly with missing values.

**foreach** *batch of samples* $\{\mathbf{x}_n\}_{n \in B}$ **do**

Drop a percentage of the data for each sample $\mathbf{x}_n$.

Encode $\mathbf{x}_n$ through the reparametrization trick to sample $\mathbf{Z}_n \sim \mathcal{N}(\mu_\phi(\mathbf{x}_n), \sigma_\phi^2(\mathbf{x}_n))$.

Use the Gumbel-softmax to sample $\mathbf{G}$ from the posterior $q(\mathbf{G})$.

Use the decoder to calculate the reconstructed sample $\hat{\mathbf{x}}_n = f_\theta(\mathbf{Z}_n, \mathbf{G})$.

Calculate the training loss $\mathcal{L}_{\text{VICAUSE}}$ Eq. 8

Gradient step w.r.t. $\phi$ (encoder parameters), $\theta$ (decoder parameters) and $\mathbf{G}$ (posterior edge probabilities).

**Output** : Encoder parameters $\phi$, decoder parameters $\theta$, and posterior probabilities over the edges $\mathbf{G}$.

# Figure 18

Europäisches
Patentamt

European
Patent Office

Office européen
des brevets

# EUROPEAN SEARCH REPORT

Application Number

EP 21 18 6786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SPINELLI INDRO ET AL: "Missing data imputation with adversarially-trained graph convolutional networks", NEURAL NETWORKS, ELSEVIER SCIENCE PUBLISHERS, BARKING, GB, vol. 129, 13 June 2020 (2020-06-13), pages 249-260, XP086239510, ISSN: 0893-6080, DOI: 10.1016/J.NEUNET.2020.06.005 [retrieved on 2020-06-13] * paragraph [0004]; figure 1 * | 1-15 | INV. G06N3/04 G06N3/08 |
| A | YUHAO WANG ET AL: "Causal Discovery from Incomplete Data: A Deep Learning Approach", ARXIV.ORG, CORNELL UNIVERSITY LIBRARY, 201 OLIN LIBRARY CORNELL UNIVERSITY ITHACA, NY 14853, 15 January 2020 (2020-01-15), XP081579287, * paragraphs [0001], [03.1]; figure 1 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 14 January 2022 | Falco, Gabriele |

EPO FORM 1503 03.82 (P04C01)

## REFERENCES CITED IN THE DESCRIPTION

**Non-patent literature cited in the description**

- **ZHENG, X. ; ARAGAM, B. ; RAVIKUMAR, P. ; XING, E. P.** DAGs with NO TEARS: Continuous Optimization for Structure Learning. *Advances in Neural Information Processing Systems,* 2018
- **KINGMA, D. ; WELLING, M.** Auto-encoding variational bayes. *arXiv preprint arXiv:1312.6114,* 2013
- **KINGMA, D. P. ; WELLING, M. et al.** An introduction to variational autoencoders. *Foundations and Trends® in Machine Learning,* 2019, vol. 12 (4), 307-392
- **ZHANG,C. ; BÜTEPAGE, J. ; KJELLSTRÖM,H. ; MANDT, S.** Advances in variational inference. *IEEE transactions on pattern analysis and machine intelligence,* 2018, vol. 41 (8), 2008-2026
- **NAZABAL, A. ; OLMOS, P. M. ; GHAHRAMANI, Z. ; VALERA, I.** Handling incomplete heterogeneous data using vaes. *PatternRecognition,* 2020, vol. 107, 107501
- EDDI: Efficient dynamic discovery of high value information with partial VAE. **MA, C. ; TSCHIATSCHEK, S. ; PALLA, K. ; HERNANDEZ-LOBATO, J. M. ; NOWOZIN, S. ; ZHANG, C.** Proceedings of the36th International Conference on Machine Learning. Proceedings of Machine Learning Research, 2019, vol. 97, 4234-4243
- **NAZABAL, A. ; OLMOS, P. M. ; GHAHRAMANI, Z. ; VALERA, I.** Handling incomplete heterogeneous data using vaes. *Pattern Recognition,* 2020, vol. 107, 107501
- **YU, Y. ; CHEN, J. ; GAO, T. ; YU,M.** Dag-gnn: Dag structure learning with graph neural networks. *Proceedings of the 36th International Conference on Machine Learning,* 2019
- Castle: Regularization via auxiliary causal graph discovery. **KYONO, T. ; ZHANG, Y. ; VAN DER SCHAAR, M.** Advances in Neural Information Processing Systems. Curran Associates, Inc, 2020, vol. 33, 1501-1512
- **GILMER, J. ; SCHOENHOLZ, S. S. ; RILEY, P. F. ; VINYALS, O. ; DAHL, G. E.** Neural message passing for quantum chemistry. *International Conference on Machine Learning,* 2017, 1263-1272
- **KIPF, T. ; FETAYA, E. ; WANG,K.-C. ; WELLING,M. ; ZEMEL,R.** Neural relational inference for interacting systems. *International Conference on Machine Learning,* 2018, 2688-2697
- **SPIRTES, P. ; GLYMOUR, C. N. ; SCHEINES, R. ; HECKERMAN, D.** Causation, prediction, and search. MITpress, 2000
- **CHICKERING, D. M.** *Optimal structure identification with greedy search Journal of machine learning research,* November 2002, vol. 3, 507-554
- **ZHENG, X. ; DAN, C. ; ARAGAM, B. ; RAVIKUMAR, P. ; XING, E. P.** Learning sparse nonparametric DAGs. *International Conference on Artificial Intelligence and Statistics,* 2020
- **STEKHOVEN, D. J. ; BÜHLMANN, P.** Missforest-non-parametric missing value imputation for mixed-type data. *Bioinformatics,* 2012, vol. 28 (1), 112-118
- **BUUREN, S. V. ; GROOTHUIS-OUDSHOORN, K.** mice: Multivariate imputation by chained equations. *Journal of statistical software,* 2010, 1-68
- EDDI: Efficient dynamic discovery of high value information with partial VAE. **MA, C. ; TSCHIATSCHEK, S. ; PALLA, K. ; HERNANDEZ-LOBATO, J. M. ; NOWOZIN, S. ; ZHANG, C.** Proceedings of the 36th International Conference on Machine Learning. Proceedings of Machine Learning Research, 2019, vol. 97, 4234-4243
- **CLAASSEN, T. ; HESKES, T.** A bayesian approach to constraint based causal inference. *Proceedings of the Twenty-Eighth Conference on Uncertainty in Artificial Intelligence,* 2012, 207-216
- **TU, R. ; ZHANG, K. ; BERTILSON, B. C. ; KJELLSTRÖM, H. ; ZHANG, C.** Neuropathic pain diagnosis simulator for causal discovery algorithm evaluation. *33rd Conference on Neural Information Processing Systems (NeurIPS),* 2019, vol. 32
- **WANG, Z. ; LAMB, A. ; SAVELIEV, E. ; CAMERON, P. ; ZAYKOV, Y. ; HERNANDEZ-LOBATO, J.M. ; TURNER, R. E. ; BARANIUK, R. G. ; BARTON, C. ; JONES, S. P. et al.** Results and insights from diagnostic questions: The neurips 2020 education challenge. *arXiv preprint arXiv:2104.0403439,* 2021
- **WANG, Z. ; TSCHIATSCHEK, S. ; WOODHEAD, S. ; HERNANDEZ-LOBATO, J.M. ; JONES, S. P. ; BARANIUK, R. G. ; ZHANG, C.** Educational question mining at scale: Prediction, analysis and personalization. *arXiv preprint arXiv:2003.05980,* 2020

- EDDI: Efficient dynamic discovery of high value information with partial VAE. **MA, C. ; TSCHIAT-SCHEK, S. ; PALLA, K. ; HERNANDEZ-LOBATO, J. M. ; NOWOZIN, S. ; ZHANG, C.** Proceedings of the36th International Conferenceon Machine Learning. Proceedings of Machine Learning Research, 2019, vol. 97, 4234-4243

- **QI, C. R. ; SU, H. ; MO, K. ; GUIBAS, L. J.** Pointnet: Deep learning on point sets for 3d classification and segmentation. *Proceedings of the IEEE conference on computer vision and pattern recognition,* 2017, 652-660
- Deepsets. **ZAHEER, M. ; KOTTUR, S. ; RAVANBA-KHSH, S. ; POCZOS, B. ; SALAKHUTDINOV, R. R. ; SMOLA, A. J.** Advances in Neural Information Processing Systems. Curran Associates, Inc, 2017, vol. 30